# EUROPÄISCHE PATENTSCHRIFT

(11) **EP 4 247 676 B1**
(45) Veröffentlichungstag und Bekanntmachung des Hinweises auf die Patenterteilung: **24.09.2025**
(21) Anmeldenummer: 21815382.3
(22) Anmeldetag: 12.11.2021
(51) Int. Cl.: B60T 13/68, B60T 8/88, B60T 17/22, B60T 8/17, B60T 8/32

(54) **AUSFALLSICHERHEITSVENTILEINHEIT, ELEKTRONISCH STEUERBARES PNEUMATISCHES BREMSSYSTEM, FAHRZEUG, VERFAHREN**
FAILSAFE VALVE UNIT, ELECTRONICALLY CONTROLLABLE PNEUMATIC BRAKE SYSTEM, VEHICLE, AND METHOD
UNITÉ DE CLAPET À SÉCURITÉ INTÉGRÉE, SYSTÈME DE FREINAGE PNEUMATIQUE À COMMANDE ÉLECTRONIQUE, VÉHICULE, ET PROCÉDÉ

(30) Priorität: 17.11.2020 DE 102020130276
(43) Veröffentlichungstag der Anmeldung: 27.09.2023
(73) Patentinhaber: ZF CV Systems Global GmbH, 3006 Bern (CH)
(72) Erfinder: VAN THIEL, Julian, 30938 Grossburgwedel (DE)
(74) Vertreter: Rabe, Dirk-Heinrich
(86) Internationale Anmeldenummer: PCT/EP2021/081452
(87) Internationale Veröffentlichungsnummer: WO 2022/106303

(56) Entgegenhaltungen:
- EP-B1- 2 055 541
- DE-A1- 102017 002 718
- DE-A1- 102019 106 274

## Beschreibung

Die Erfindung betrifft eine Ausfallsicherheitsventileinheit gemäß dem Oberbegriff des Anspruchs 1. Die Erfindung betrifft auch ein elektronisch steuerbares pneumatisches Bremssystem mit einer Ausfallsicherheitsventileinheit gemäß der vorstehend genannten Art. Die Erfindung betrifft auch ein Fahrzeug mit einem elektronisch steuerbaren pneumatischen Bremssystem gemäß der vorstehend genannten Art. Die Erfindung betrifft auch ein Verfahren zum Betreiben eines Bremssystems der vorstehend genannten Art.

In modernen elektronisch steuerbaren pneumatischen Bremssystemen, die insbesondere bei Nutzfahrzeugen eingesetzt werden, die für einen autonomen Fahrbetrieb vorgesehen sind, ist es wichtig, Maßnahmen bereitzustellen, die bei einem Fehler in dem Bremssystem dennoch ein sicheres Verzögern des Nutzfahrzeugs zulassen.

Insbesondere ist das Bereitstellen von Redundanzen eine bewährte Maßnahme zur Erhöhung der Sicherheit. Hier gibt es Ansätze, vollständig redundante Bremssysteme einzusetzen, teilweise redundante Bremssysteme oder nur verschiedene Ebenen in einem Bremssystem, sodass bei einem Fehler in einer ersten Ebene das Bremssystem in einer zweiten Ebene wenigstens eingeschränkt weiterbetrieben werden kann.

Ein Ansatz ist das Bereitstellen einer Funktion zur Ausfallbremsung im Fall eines Fehlers, indem die Feststellbremse aktiviert wird. Problematisch hierbei ist die zeitliche Verzögerung der Ausfallbremsung, die auf eine Totzeit im Ansprechverhalten zurückzuführen ist aufgrund der - im Vergleich zu einer Betriebsbremse - inversen Wirkkette einschließlich des Druckoffsets, der zum Einfallen der Feststellbremse überwunden werden muss.

Es bestehen daher vorteilhaft Ansätze, die im Fall eines Fehlers auf der Aussteuerung eines Bremsdrucks an die Betriebsbremse basieren.

Ein System, das eine elektronisch pneumatisch gesteuerte Redundanz bereitstellt, ist in DE 10 2016 005 318 A1 offenbart. Das dort offenbarte System nutzt ein Bypass-Ventil, um je nach Ausfall eines Subsystems Steuerdrücke weiterzuleiten, um so den jeweils elektrisch ausgefallenen Kreis wenigstens pneumatisch zu versorgen. Auch hierdurch wird allgemein vorteilhaft die Restverfügbarkeit erhöht. Ähnliche Systems sind in DE 10 2016 010 462 A1 und in DE 10 2016 010 464 A1 offenbart.

Die DE102017002718A1 beschreibt ein elektronisch steuerbares Bremssystem für ein Fahrzeug mindestens aufweisend einen Betriebsbremskreis mit Betriebsbremsen und einem Betriebsbrems-Steuermodul, wobei den Betriebsbremsen ein Betriebsbrems-Bremsdruck zuführbar ist und das Betriebsbrems-Steuermodul ausgebildet ist, in Abhängigkeit einer Bremsvorgabe ein Betriebsbrems-Steuersignal zu erzeugen, wobei der Betriebsbrems-Bremsdruck in Abhängigkeit des Betriebsbrems-Steuersignals erzeugt und an die Betriebsbremsen vorgegeben werden kann zum von dem Betriebsbrems-Steuermodul elektrisch gesteuerten Umsetzen der Bremsvorgabe über den mindestens einen Betriebsbremskreis, und aufweisend einen Parkbremskreis mit Federspeicherbremsen, wobei den Federspeicherbremsen ein Parkbrems-Bremsdruck zuführbar ist, wobei der Parkbrems-Bremsdruck in Abhängigkeit der Bremsvorgabe erzeugt und an die Federspeicherbremsen vorgegeben werden kann zum Umsetzen der Bremsvorgabe über den Parkbremskreis, und weiter aufweisend einen Inverter-Steuerventil mit einem Inverter-Ausgang und/oder einem Redundanz-Ausgang, wobei das Inverter-Steuerventil ausgebildet ist, einen Inverter-Steuerdruck zu erzeugen und über den Inverter-Ausgang und/oder den Redundanz-Ausgang auszugeben, wobei der Inverter-Steuerdruck umgekehrt proportional zu dem Parkbrems-Bremsdruck und/oder einem den Parkbrems-Bremsdruck vorgebenden Parkbrems-Steuerdruck ist, die auszusteuern sind, um die Bremsvorgabe im Parkbremskreis über die Federspeicherbremsen umzusetzen, wobei in dem Bremssystem weiterhin ein Umschaltventil angeordnet ist, wobei das Umschaltventil zwei Umschaltventil-Schaltstellungen aufweist, wobei bei Vorliegen einer von einem Fahrer manuell über ein Betriebsbremsventil angeforderten Betriebsbrems-Vorgabe eine erste Umschaltventil-Schaltstellung des Umschaltventils einstellbar ist, in der der Betriebsbrems-Bremsdruck in Abhängigkeit der über das Betriebsbremsventil vorgegebenen Betriebsbrems-Bremsvorgabe vorgebbar ist und sonst eine zweite Umschaltventil-Schaltstellung einstellbar ist, in der der Betriebsbrems-Bremsdruck in Abhängigkeit des von dem Inverter-Steuerventil vorgegebenen Inverter-Steuerdruckes vorgebbar ist.

Die EP2055541B1 offenbart ein Fahrerassistenzsystem für einen Kraftwagen sowie einen Kraftwagen, mit mindestens einem Betriebsdatensensor zum Erfassen von den momentanen oder zukünftigen Bewegungszustand des Kraftwagens charakterisierenden Betriebsdaten und einer elektrischen Steuerung, die ausgebildet ist, um bei einem Vorliegen von vorbestimmten Betriebsdaten eine autonome Notbremsung des Kraftwagens auszulösen, wobei unter einer Notbremsung eine Bremsung des Kraftwagens verstanden wird, die mit höchstmöglicher Verzögerung erfolgt, wobei die elektrische Steuerung eingerichtet ist, um unmittelbar vor, während oder nach einer Notbremsung eine Feststellbremse des Kraftwagens in eine Aktivierungsstellung zu bringen, in der ein Stromausfall die Feststellbremse passiv in eine Bremsstellung bringt.

Das Konzept ist noch verbesserungswürdig, insbesondere hinsichtlich einer zuverlässigen Bereitstellung einer Ausfallbremsung im Fehlerfall und einer an- haltenden Sicherstellung des gebremsten Zustands. Wünschenswert ist es daher, die Funktion der Ausfallsicherheitsventileinheit zu verbessern. An dieser Stelle setzt die Erfindung an, deren Aufgabe es ist, eine verbesserte Ausfallsicherheitsventileinheit anzugeben. Insbesondere soll eine Ausfallsicherheitsventileinheit bereitgestellt werden, die in einem Fehlerfall eine Ausfall- bremsung zuverlässig bereitstellt und den gebremsten Zustand des Fahrzeugs anhaltend sicherstellt. Die Erfindung geht aus von einer Ausfallsicherheitsventileinheit für eine Ausfall- bremsfunktion eines elektronisch steuerbaren pneumatischen Bremssystems für ein Fahrzeug, insbesondere ein Nutzfahrzeug, wobei das Bremssystem eine Steuereinheit aufweist, und die Ausfallsicherheitsventileinheit aufweist: einen, einen ersten Druck bereitstellenden, Hauptanschluss und einen Ausfallbremsanschluss, ein als monostabiles Ventil ausgebildetes Ausfallbremsventil, das von der Steuereinheit oder einer externen Steuereinheit steuerbar ist, und ausgebildet ist, den Hauptanschluss und den Ausfallbremsanschluss in einer Öffnungsstellung zur Aussteuerung eines Ausfallbremsdrucks am Ausfallbremsanschluss pneumatisch zu verbinden.

Erfindungsgemäß ist bei der Ausfallsicherheitsventileinheit gemäß dem ersten Aspekt der Erfindung vorgesehen, dass
- in einem Fehlerfall und/oder Stromausfall und/oder Diagnosefall der Steuereinheit das Ausfallbremsventil in der Öffnungsstellung ist, und dass
- über das Bereitstellen des Ausfallbremsdrucks am Ausfallbremsanschluss durch das Bremssystem eine Ausfallbremsung des Fahrzeugs ausgelöst wird, wobei
- der Hauptanschluss zum Empfangen eines ausgesteuerten Feststell-Bremsdrucks oder eines von diesem abgeleiteten Drucks als erster Druck pneumatisch mit einer Feststellbremsfunktion verbunden ist.

Das elektronisch steuerbare pneumatische Bremssystem weist insbesondere ein Betriebsbremssystem und ein Feststellbremssystem auf. Die Feststellbremsfunktion ist ausgebildet zum pneumatischen Betätigen mindestens eines Feststellbremszylinders.

Die Idee der Erfindung basiert auf dem Gedanken, ein Bremssystem, insbesondere ein Betriebsbremssystem des Bremssystems, über einen separaten Ansteuerzweig - zwecks Auslösung einer Ausfallbremsung im Fehlerfall ansteuerbar zu halten. Insbesondere soll durch das Bereitstellen eines Ausfallbremsdrucks im Fehlerfall ein sicheres Verzögern des Fahrzeugs durch eine Ausfallbremsung gewährleistet werden.

Die Erfindung schließt die Erkenntnis ein, dass ein andauerndes Halten des gebremsten Zustands des Fahrzeugs wichtig für die Sicherheit des Fahrzeugs ist. Nach einer Ausfallbremsung durch die Ausfallsicherheitsventileinheit kann es zu einer Leckage in dem - die Ausfallbremsung durchführenden - Betriebsbremskreis, insbesondere in einer Steuerleitung eines pneumatischen Vorderachsbremskreises, oder an einem Vorderachsmodulator oder an einer anderen Stelle in einem separaten Ansteuerzweig, in dem die Ausfallsicherheitsventileinheit angeordnet ist, kommen. Bei einer solchen Leckage kann es - wenn sich der angeschlossene Druckvorrat fortschreitend entleert - zu einem Abfallen des Ausfallbremsdrucks und dadurch zu einem Nachlassen der Wirkung der Ausfallbremsung kommen.

Dadurch, dass erfindungsgemäß der Hauptanschluss zum Empfangen eines ausgesteuerten Feststell-Bremsdrucks als erster Druck pneumatisch mit einer Feststellbremsfunktion verbunden ist, wird vorteilhaft erreicht, dass bei einer auftretenden Leckage nach einer Ausfallbremsung durch die Ausfallsicherheitsventileinheit der mindestens eine Feststellbremszylinder ebenfalls mit dem leckagebehafteten Teil pneumatisch verbunden ist. Eine Leckage führt durch die erfindungsgemäße Ausfallsicherheitsventileinheit somit zu einem Einfallen der Feststellbremse und dadurch zu einem sicheren Halten des gebremsten Zustands des Fahrzeugs. Das Einfallen der Feststellbremse wird durch ein Entlüften des Feststellbremszylinders und ein Wirken einer sich dabei entspannenden Druckfeder auf eine Radbremse erreicht.

Durch die erfindungsgemäße Ausfallsicherheitsventileinheit wird also die pneumatische Verbindung von einem - die Ausfallbremsung durchführenden - Betriebsbremskreis, insbesondere einem Vorderachsbremskreis der Betriebsbremse, mit dem ausgesteuerten Feststell-Bremsdruck gezielt genutzt, um bei einem auftretenden Druckverlust die nachlassende Wirkung des - die Ausfallbremsung durchführenden - Betriebsbremskreises durch die einsetzende Wirkung der Feststellbremse zu kompensieren. Dieser Prozess kann insbesondere relativ langsam, im Bereich von Stunden oder sogar Tagen, ablaufen, insbesondere abhängig von der Größe der Leckage.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Insbesondere umfasst das Feststellbremssystem und/oder die Feststellbremsfunktion ein Feststell-Bremsmodul. Die Feststellbremsfunktion ist vorzugsweise ausgebildet, einen Feststellbremsdruck zum Belüften von Feststellbremszylindern auszusteuern. Die Feststellbremsfunktion wird vorzugsweise von einem Feststell-Bremsmodul bereitgestellt. In Weiterbildungen kann die Feststellbremsfunktion von einer anderen pneumatischen oder elektropneumatischen Einrichtung bereitgestellt werden, beispielsweise einem Achsmodulator, einem Anhängersteuermodul oder dergleichen pneumatischen oder elektropneumatischen Einrichtung.

Insbesondere ist der Hauptanschluss pneumatisch mit einem Feststellbremszylinder, bevorzugt mit zwei, jeweils auf einer Fahrzeugseite angeordneten, Feststellbremszylindern verbunden. Insbesondere ist der Hauptanschluss pneumatisch mit mindestens einer Feststellbremskammer des Feststellbremszylinders verbunden.

Die Erfindung wird durch ein Auswahlventil weitergebildet mit einem ersten Anschluss, der zum Empfangen des ersten Drucks mit der Feststellbremsfunktion, insbesondere einem Feststellbremssystem und/oder dem Feststell-Bremsmodul, pneumatisch verbunden ist,
- mit einem zweiten Anschluss, der zum Empfangen eines weiteren Vorratsdrucks als zweiter Druck pneumatisch mit einem weiteren Druckluftvorrat verbunden ist, und
- mit einem dritten Anschluss, der pneumatisch mit dem Ausfallbremsventil verbunden ist, wobei
- das Auswahlventil ausgebildet ist, denjenigen von dem ersten und zweiten Anschluss pneumatisch mit dem dritten Anschluss zu verbinden, an dem der höhere Druck anliegt und insbesondere den jeweils anderen Anschluss zu sperren.

Eine Weiterbildung mit einem Auswahlventil schließt die Erkenntnis ein, dass eine redundante Versorgung der Ausfallsicherheitsventileinheit mit Druckluft die Sicherheit des Fahrzeugs vorteilhaft erhöht. Mittels eines Auswahlventils mit einem ersten Anschluss der zum Empfangen des ersten Drucks mit einem Feststellbremssystem pneumatisch verbunden ist, kann vorteilhaft die Verfügbarkeit einer ersten Druckluftquelle zum Bereitstellen eines Ausfallbremsdrucks bereitgestellt werden, die insbesondere unabhängig von der im Normalbetrieb verwendeten Druckluftquelle des Bremskreises ist, insbesondere eines Betriebsbremskreises, dem der Ausfallbremsdruck bereitgestellt wird. Somit wird bereits vorteilhaft eine Redundanz durch die Verwendung eines separaten Bremskreises erreicht.

Mittels eines zweiten Anschlusses des Auswahlventils, der zum Empfangen eines weiteren Vorratsdrucks als zweiter Druck pneumatisch mit einem weiteren Druckluftvorrat verbunden ist, wird vorteilhaft eine noch weitere, unabhängig vom Feststellbremssystem vorhandene Druckluftquelle als noch weitere Redundanz bereitgestellt. Der weitere Druckluftvorrat kann dabei insbesondere auch ein Druckluftvorrat des Betriebsbremssystems sein.

Dadurch, dass das Ausfallbremsventil einen dritten Anschluss aufweist, der pneumatisch mit dem Ausfallbremsventil verbunden ist, und das Ausfallbremsventil ausgebildet ist, denjenigen von dem ersten und zweiten Anschluss pneumatisch mit dem dritten Anschluss zu verbinden, an dem der höhere Druck anliegt, wird vorteilhaft auch bei einem Ausfall von einer Druckluftquelle an einem von dem ersten und zweiten Anschluss die andere, verfügbare Druckluftquelle automatisch mit dem Ausfallbremsventil verbunden.

Durch das Auswahlventil wird somit die Verfügbarkeit der Ausfallbremsfunktion und somit die Sicherheit des Fahrzeugs vorteilhaft noch weiter erhöht.

Insbesondere ist das Ausfallbremsventil ausgebildet, im nicht angesteuerten, insbesondere stromlosen, Zustand in der Öffnungsstellung zu sein. Insbesondere ist das Ausfallbremsventil monostabil ausgebildet.

Bevorzugt ist das Auswahlventil als Wechselventil, besonders bevorzugt als Select-High-Wechselventil ausgebildet.

Der Feststell-Bremsdruck ist insbesondere ein von einem Feststell-Bremsmodul ausgesteuert bzw. bereitgestellt. Der Feststellbremskreis-Vorratsdruck ist insbesondere von einem Druckluftvorrat des Feststellbremssystems bereitgestellt. Wird der Feststellbremskreis-Vorratsdruck von einem Druckluftvorrat des Feststellbremssystems bereitgestellt, ist das Feststellbremssystem, insbesondere das Feststell-Bremsmodul, vorteilhaft ausgebildet, dass in einem elektrisch passiven Zustand ohne Vorratsdruck automatisch einfällt. Ein elektrisch passiver Zustand liegt insbesondere vor, wenn die Steuereinheit und/oder eine weitere Steuereinheit und/oder das Feststell-Bremsmodul nicht mit Strom versorgt werden oder aufgrund eines Fehlerfalls ausfallen.

Bevorzugt ist vorgesehen, dass der Ausfallbremsdruck als Steuerdruck für einen Achsmodulator, insbesondere für einen Vorderachsmodulator, bereitgestellt wird, oder der Ausfallbremsdruck als Bremsdruck für einen Bremszylinder bereitgestellt wird. Wenn der Ausfallbremsdruck als Bremsdruck für einen Bremszylinder bereitgestellt wird, kann vorteilhaft eine vollständige Versorgung der für die Ausfallbremsung benötigten Druckluft mittels der Ausfallsicherheitsventileinheit erreicht werden, wenn insbesondere der Bremszylinder vollständig mittels der von der Ausfallsicherheitsventileinheit bereitgestellten Druckluft mit dem Ausfallbremsdruck aktiviert wird. Wenn der Ausfallbremsdruck als Bremsdruck für einen Modulator bereitgestellt wird, wirkt der Ausfallbremsdruck insbesondere auf einen Steueranschluss des Modulators, wobei der Modulator insbesondere luftmengenverstärkend wirkt und insbesondere von einer weiteren Druckluftquelle bzw. Druckluftvorrat versorgt wird. Der Steueranschluss des Modulators ist insbesondere ein Redundanzanschluss des Modulators.

Bevorzugt ist ein weiteres Ausfallbremsventil vorgesehen, das mit dem Ausfallbremsventil pneumatisch in Reihe geschaltet ist, und von einer Steuereinheit, insbesondere einer weiteren Steuereinheit, steuerbar ist. Das weitere Ausfallbremsventil ist bevorzugt im nicht angesteuerten, insbesondere stromlosen, Zustand in einer Öffnungsstellung geöffnet ist derart, dass der am Hauptanschluss anliegende erste Druck als Ausfallbremsdruck am Ausfallbremsanschluss bereitgestellt wird. Insbesondere ist das weitere Ausfallbremsventil über ein weiteres Steuersignal steuerbar. Insbesondere ist die Steuereinheit einem Primärsystem zugeordnet. Insbesondere ist die weitere Steuereinheit und/oder das weitere Ausfallbremsventil einer ersten Rückfallebene zugeordnet. In Weiterbildungen mit einer weiteren Steuereinheit kann mittels eines weiteren Ausfallbremsventils vorteilhaft auch dann eine Ausfallbremsung gewährleistet werden, wenn ein Doppelfehler vorliegt, das heißt wenn sowohl die Steuereinheit als auch die weitere Steuereinheit einen Fehlerfall aufweisen. Ein Fehlerfall kann insbesondere durch einen Ausnahmefehler und/oder einen Stromausfall verursacht werden. Das weitere Ausfallbremsventil ist insbesondere monostabil ausgebildet. Das Ausfallbremsventil und/oder das weitere Ausfallbremsventil sind insbesondere in einer Ventilhauptleitung angeordnet.

Die Erfindung wird dadurch weitergebildet, dass das weitere Ausfallbremsventil als ein 2/2-Wegeventil, insbesondere als ein 2/2-Wege-Magnetventil, ausgebildet ist. Durch ein als 2/2-Wegeventil ausgebildetes weiteres Ausfallbremsventil kann vorteilhaft der ausgesteuerte Ausfallbremsdruck moduliert werden, insbesondere durch ein zeitlich gesteuertes Öffnen und Schließen des 2/2-Wegeventils. Insbesondere kann ein gestuftes Bremsen bei Teilausfällen bzw. bei einer Restverfügbarkeit der Steuereinheit gewährleistet werden, beispielsweise, wenn noch eine Spannungsversorgung verfügbar ist. Durch ein Modulieren des Ausfallbremsdrucks kann insbesondere eine weniger abrupte Ausfallbremsung erreicht werden.

Bevorzugt ist vorgesehen, dass das Ausfallbremsventil und/oder das weitere Ausfallbremsventil als ein 3/2-Wegeventil, insbesondere als ein 3/2-Wege-Magnetventil, ausgebildet ist. Insbesondere sind das Ausfallbremsventil und das weitere Ausfallbremsventil baugleich ausgebildet. Insbesondere weist das Ausfallbremsventil und/oder das weitere Ausfallbremsventil einen Entlüftungsanschluss auf, der in einer Sperrstellung des Ausfallbremsventils bzw. des weiteren Ausfallbremsventils mit dem Ausfallbremsanschluss pneumatisch verbunden ist. Auf diese Weise wird in der Sperrstellung eine Entlüftung des Ausfallbremsanschlusses ermöglicht.

Bevorzugt ist ein Druckbegrenzungsventil vorgesehen. Mittels eines Druckbegrenzungsventils kann vorteilhaft ein vor definierter Ausfallbremsdruck eingestellt werden, um eine geeignete Bremsleistung im Fall einer Ausfallbremsung zu erreichen. Bevorzugt ist ein Druckbegrenzungsventil am Hauptanschluss der Ausfallsicherheitsventileinheit oder zwischen dem Hauptanschluss und dem ersten folgenden Ventil der Ausfallsicherheitsventileinheit angeordnet.

Bevorzugt ist ein Bistabilventil vorgesehen, das ausgebildet ist zum Umschalten zwischen einer ersten, die Ventilhauptleitung sperrenden oder mit einer Entlüftung verbindenden Deaktivierungsstellung und einer zweiten, die Ventilhauptleitung verbindenden Aktivierungsstellung, wobei das Bistabilventil mit dem mindestens einen Ausfallbremsventil pneumatisch in Reihe geschaltet ist. Mittels eines Bistabilventils kann die Ausfallsicherheitsventileinheit vorteilhaft sowohl in einem für einen automatischen Betrieb des Fahrzeugs geeigneten Modus, als auch für einen manuellen Betrieb des Fahrzeugs geeigneten Modus betrieben werden. Insbesondere ist das Bistabilventil derart ausgebildet, dass in der ersten, die Ventilhauptleitung sperrenden Stellung die Ventilhauptleitung an einem ersten Bistabilventilanschluss pneumatisch mit einer Entlüftung des Bistabilventils verbunden, und dabei die Ventilhauptleitung an einem zweiten Bistabilventilanschluss gesperrt ist, und in einer zweiten, die Ventilhauptleitung pneumatisch verbindenden Stellung die Ventilhauptleitung zwischen dem ersten und zweiten Bistabilventilanschluss pneumatisch verbunden, und dabei die Entlüftung des Bistabilventils gesperrt ist. Das Bistabilventil ist vorzugsweise in einer Ventilhauptleitung angeordnet.

Wenn sich das Bistabilventil in einer ersten, die Ventilhauptleitung sperrenden Stellung befindet, wird unabhängig von der Stellung der Ausfallbremsventile ein Bereitstellen eines Ausfallbremsdrucks am Ausfallbremsanschluss der Ausfallsicherheitsventileinheit per se verhindert. In dieser ersten Stellung wird also eine Ausfallbremsung, die durch einen Doppelfehler hervorgerufen würde, verhindert. Dies kann insbesondere bei einem manuellen Betrieb des Fahrzeugs vorteilhaft der Fall sein, insbesondere wenn ein menschlicher Fahrer die Kontrollhoheit über das Fahrzeug behalten soll. Im Unterschied dazu kann das Bistabilventil in eine zweite, die Ventilhauptleitung pneumatisch verbindende Stellung geschaltet werden, damit - wenn sich das mindestens eine Ausfallbremsventil der Ausfallsicherheitsventileinheit in einer Öffnungsstellung befindet, der Aus-fallbremsdruck am Ausfallbremsanschluss zur Auslösung einer Ausfallbremsung des Fahrzeugs bereitgestellt werden kann. Gemäß dem Konzept eines Bistabilventils verharrt dieses in seiner Schaltstellung, und zwar auch im stromlosen Zustand und insbesondere unabhängig von etwaigen Fehlerfällen im Bremssystem. Das Bistabilventil wird insbesondere über die Steuereinheit oder eine Ventil-Steuereinheit gesteuert. Eine Ventil-Steuereinheit ist insbesondere mit der Steuereinheit des Bremssystems und/oder mit einem Fahrzeug-Bus signal- und/oder energieleitend verbunden.

Bevorzugt ist ein weiteres Auswahlventil vorgesehen mit einem ersten weiteren Anschluss, der zum Empfangen des Bremswertgeberdrucks pneumatisch mit einem Bremswertgeber, insbesondere mit einer pneumatischen Vorderachsmodulator-Steuerleitung, verbunden ist, einem zweiten weiteren Anschluss, der zum Empfangen des Ausfallbremsdrucks pneumatisch mit dem Ausfallbremsanschluss verbunden ist, und einem dritten weiteren Anschluss, der pneumatisch mit einem Betriebsbremszylinder oder einem Achsmodulator verbunden ist, wobei das weitere Auswahlventil ausgebildet ist, denjenigen von dem ersten und zweiten weiteren Anschluss pneumatisch mit dem dritten weiteren Anschluss zu verbinden, an dem der höhere Druck anliegt, und insbesondere den jeweils anderen Anschluss zu sperren. Mittels eines weiteren Auswahlventils kann vorteilhaft der Ausfallbremsdruck zusätzlich zum Bremswertgeber in den Betriebsbremskreis eingesteuert werden.

Bevorzugt ist ein Drucksensor vorgesehen der am Ausfallbremsanschluss 22 angeordnet oder pneumatisch mit diesem verbunden ist. Mittels eines Drucksensors kann vorteilhaft die Druckreaktion und somit die Funktionsweise der Ausfallsicherheitsventileinheit plausibilisiert und/oder geprüft werden.

Bevorzugt ist ein Ausfall-Relaisventil vorgesehen. Das Ausfall-Relaisventil ist insbesondere zwischen dem mindestens einen Ausfallbremsventil, sowie einem etwaigen Bistabilventil auf der einen Seite, und dem Ausfallbremsanschluss auf der anderen Seite angeordnet. Ein Ausfall-Relaisventil kann vorteilhaft luftmengenverstärkend wirken, wodurch die übrigen Ventile der Ausfallsicherheitsventileinheit vorteilhaft mit kleineren Nennweiten ausgebildet sein können.

In optionalen Weiterbildungen kann das weitere Auswahlventil an einer anderen Stelle im Betriebsbremssystem angeordnet sein, insbesondere in einem pneumatischen Vorderachsbremskreis zur direkten Versorgung eines oder mehrerer Betriebsbremszylinder.

In einer bevorzugten Weiterbildung ist eine externe Steuereinheit vorgesehen, die signal- und/oder energieleitend mit einem oder mehreren der Ventile der Ausfallsicherheitsventileinheit, insbesondere mit dem mindestens einen Ausfallbremsventil, verbunden ist. Insbesondere ist die externe Steuereinheit über eine alternative Steuerleitung und/oder eine alternative weitere Steuerleitung mit der Ausfallsicherheitsventileinheit verbunden. Die externe Steuereinheit ist insbesondere zur Überwachung der Steuereinheit mit dieser signalführend verbunden, insbesondere über eine Überwachungsleitung. Die externe Steuereinheit kann insbesondere vorteilhaft durch eine andere elektronische Steuereinheit des Fahrzeugs oder als Teil einer solchen anderen elektronischen Steuereinheit gebildet sein. Eine solche andere elektronische Steuereinheit ist insbesondere ein virtueller Fahrer, beispielsweise in Form einer Automatikbetrieb-Steuereinheit, oder eine elektronische Steuereinheit eines Lenksystems oder eines Feststellbremssystems oder einer Luftaufbereitungsanlage. Mittels einer externen Steuereinheit kann vorteilhaft die Funktion der Steuereinheit, das heißt der Steuereinheit des Bremssystems, insbesondere des Betriebsbremssystems, überwacht werden. Bei einem Fehlerfall der Steuereinheit wird dieser mittels der externen Steuereinheit erkannt. Die externe Steuereinheit kann im Fehlerfall die Ansteuerung der Ventile der Ausfallsicherheitsventileinheit, insbesondere des mindestens einen Ausfallbremsventils, unterbrechen und insbesondere eine Ausfallbremsung auslösen.

**In** einem zweiten Aspekt gibt die Erfindung zur Lösung der Aufgabe weiterhin ein elektronisch steuerbares pneumatisches Bremssystem für ein Fahrzeug, insbesondere ein Nutzfahrzeug an, aufweisend eine Steuereinheit.

Bei dem elektronisch steuerbaren pneumatischen Bremssystem ist eine Ausfallsicherheitsventileinheit gemäß wenigstens einer der vorstehend beschriebenen bevorzugten Ausführungsformen einer Ausfallsicherheitsventileinheit gemäß dem ersten Aspekt der Erfindung vorgesehen, wobei die Ausfallsicherheitsventileinheit in einem separaten Ansteuerzweig angeordnet ist und zur Bereitstellung eines Ausfallbremsdrucks für einen Achsmodulator zum Auslösen einer Ausfallbremsung des Fahrzeugs über einen Ausfallbremsanschluss mit mindestens einem Betriebsbremszylinder und/oder einer Betriebsbremskammer und/oder einem Achsmodulator pneumatisch verbindbar ist.

Bei dem Bremssystem werden die Vorteile der Ausfallsicherheitsventileinheit vorteilhaft genutzt. "Separater Ansteuerzweig" bedeutet hier, dass die Ausfallsicherheitsventileinheit in einem zusätzlichen pneumatischen Ansteuerzweig angeordnet ist, der separat zu einem primären, insbesondere einen Bremswertgeber aufweisenden, pneumatischen Ansteuerzweig gebildet ist.

In einer Weiterbildung des elektronisch steuerbaren pneumatischen Bremssystems ist ein Achsmodulator vorgesehen mit einer Drossel, insbesondere einer Abdüsungsbohrung, die einen, einen Steuerdruck führenden Teil des Achsmodulators mit einem, einen Arbeitsdruck führenden Teil des Achsmodulators pneumatisch verbindet. Der Steuerdruck führende Teil des Achsmodulators ist insbesondere durch eine Steuerleitung des Achsmodulators, insbesondere eines Relaisventils des Achsmodulators, gebildet. Der Arbeitsdruck führende Teil des Achsmodulators ist insbesondere durch eine Arbeitsleitung des Achsmodulators, insbesondere eines Relaisventils des Achsmodulators, gebildet. Insbesondere ist die Drossel in einem Relaiskolben des Relaisventils des Achsmodulators vorgesehen. Mittels einer derartigen Drossel kann das Einfallen der Feststellbremse vorteilhaft auch in dem Fall einer Leckage in einer Arbeitsleitung oder einem pneumatisch mit der Arbeitsleitung verbundenen Teil gewährleistet werden.

In einer Weiterbildung des elektronisch steuerbaren pneumatischen Bremssystems ist vorgesehen, dass die Steuereinheit einem Primärsystem des elektronisch steuerbaren pneumatischen Bremssystems zugeordnet ist, und das elektronisch steuerbare pneumatische Bremssystem weiter aufweist: eine weitere Steuereinheit für eine erste Rückfallebene, wobei das Ausfallbremsventil von der Steuereinheit und das weitere Ausfallbremsventil von der weiteren Steuereinheit ansteuerbar ist, und die erste Steuereinheit und die zweite Steuereinheit unabhängig voneinander mit Energie versorgt und/oder sich wenigstens teilweise gegenseitig in ihrer Funktion ersetzen können.

Die Erfindung führt in einem dritten Aspekt zur Lösung der Aufgabe weiterhin auf ein Fahrzeug, insbesondere Nutzfahrzeug, mit einem Bremssystem gemäß dem Konzept der Erfindung. Bei dem Fahrzeug werden die Vorteile der Ausfallsicherheitsventileinheit vorteilhaft genutzt. In einer Weiterbildung des Fahrzeugs ist eine externe Steuereinheit vorgesehen.

Die Erfindung führt in einem vierten Aspekt zur Lösung der Aufgabe weiterhin auf ein Verfahren zum Betreiben eines Bremssystems mit einer Ausfallsicherheitsventileinheit für eine Ausfallbremsfunktion eines elektronisch steuerbaren pneumatischen Bremssystems, insbesondere gemäß dem zweiten Aspekt der Erfindung, für ein Fahrzeug oder ein Nutzfahrzeug, insbesondere gemäß dem dritten Aspekt der Erfindung, wobei die Ausfallsicherheitsventileinheit vorzugsweise nach einer der vorstehend beschriebenen bevorzugten Ausführungsformen einer Ausfallsicherheitsventileinheit gemäß dem ersten Aspekt der Erfindung ausgebildet ist.

Bei dem Verfahren gemäß dem vierten Aspekt der Erfindung sind die Schritte vorgesehen:
- Bereitstellen eines Signals zum Aussperren eines für eine Ausfallbremsung wirksamen Ausfallbremsdrucks durch eine Steuereinheit,
- Unterbrechen des Bereitstellens des Signals in einem Fehlerfall und/oder einem Stromausfall und/oder einem Diagnosefall der Steuereinheit, dadurch selbsttätiges Beenden des Aussperrens des Ausfallbremsdrucks zum Auslösen einer Ausfallbremsung des Fahrzeugs, wobei
- der Ausfallbremsdruck ein von einer Feststellbremsfunktion des Bremssystems ausgesteuerter Feststellbremsdruck zum Belüften von Feststellbremszylindern oder ein von diesem abgeleiteter Druck ist.

Vorzugsweise beinhaltet das Beenden des Aussperrens des Ausfallbremsdrucks ein Schalten des Ausfallbremsventils in eine Öffnungsstellung. Vorzugsweise wird das Signal zum Aussperren eines für eine Ausfallbremsung wirksamen Ausfallbremsdrucks für ein Ausfallbremsventil bereitgestellt. Bevorzugt ist das Ausfallbremsventil ein monostabiles, im nicht angesteuerten Zustand öffnendes, Ausfallbremsventil. Vorzugsweise wird das Signal von einer Steuereinheit bereitgestellt. Vorzugsweise ist das Signal ein elektrisches oder elektronisches Signal. In anderen Weiterbildungen ist es denkbar, dass das Signal ein anderes Signal, beispielsweise ein pneumatisches Signal ist. Vorzugsweise ist das Unterbrechen des Bereitstellens des Signals durch den Fehlerfall und/oder Stromausfall der Steuereinheit bedingt.

Vorzugsweise umfasst das selbsttätige Beenden des Aussperrens des Ausfallbremsdrucks ein selbsttätiges Schalten des Ausfallbremsventils in seine Öffnungsstellung. Vorzugsweise ist das Ansteuern des Ausfallbremsventils ein Bestromen eines Magnetteils und/oder Elektromagneten des Ausfallbremsventils. Vorzugsweise ist das Ausfallbremsventil ein monostabiles, stromlos öffnendes Ausfallbremsventil. Vorzugsweise wird der Ausfallbremsdruck an einen Achsmodulator oder einen Betriebsbremszylinder bereitgestellt. Vorzugsweise wird der ausgesteuerte Feststellbremsdruck von einem Feststell-Bremsmodul bereitgestellt.

In einer Weiterbildung des Verfahrens gemäß dem vierten Aspekt der Erfindung ist ein Diagnoseablauf vorgesehen, aufweisend den Schritt:
- Ermitteln des Ausfallbremsdrucks, vorzugsweise mittels eines Drucksensors am Ausfallbremsanschluss, wobei
- vor dem Unterbrechen des Bereitstellens des Signals, vorzugsweise in einem Diagnosefall der Steuereinheit, eine Druckaussteuerung im Betriebsbremssystem, vorzugsweise eine Bremsanforderung an einen Achsmodulator, angefordert wird.

Der Diagnosefall stellt dabei im Unterschied zu dem Fehlerfall und dem Stromausfall einen bewusst beigeführten Zustand einer Steuereinheit zu Diagnosezwecken dar, bei dem vorzugsweise der Zustand des Signals oder der Signale zum Aussperren eines für eine Ausfallbremsung wirksamen Ausfallbremsdrucks dem Zustand bei einem Fehlerfall und/oder Stromausfall entspricht. Vorzugsweise wird in einem Diagnosefall das Bereitstellen des Signals zum Aussperren eines für eine Ausfallbremsung wirksamen Ausfallbremsdrucks unterbrochen.

Vorzugsweise wird der ausgesteuerte Ausfallbremsdruck zum Überprüfen der korrekten Funktion des Ausfallbremsventils ermittelt. Vorzugsweise liegt die korrekte Funktion des Ausfallbremsventils darin, dass durch ein Unterbrechen des Ansteuerns des Ausfallbremsventils eine Druckreaktion hervorgerufen wird in Form eines Aussteuerns des Ausfallbremsdrucks. Die Druckreaktion kann mittels des Diagnoseablaufs vorteilhaft plausibilisiert werden.

Vorzugsweise wird die Bremsanforderung von einem Bremswertgeber bereitgestellt. Insbesondere wird die Bremsanforderung über einen Fahrzeug-Datenbus bereitgestellt. Vorzugsweise die Bremsanforderung und/oder die Anforderung einer Druckaussteuerung im Betriebsbremssystem in Form eines XBR-Signals oder dergleichen Signal eines Fahrzeug-Datenbus.

Dadurch, dass vor dem Unterbrechen des Bereitstellens des Signals eine Druckaussteuerung im Betriebsbremssystem, insbesondere eine Bremsanforderung an einen Achsmodulator, angefordert wird, wird vorteilhaft ein möglicher Plausibilitätsfehler im Bremssystem, insbesondere in der Steuereinheit, vermieden. Ein solcher Plausibilitätsfehler würde, insbesondere durch die Steuereinheit, festgestellt, wenn ein Druck in das Betriebsbremssystem durch die Ausfallsicherheitsventileinheit eingesteuert wird, ohne dass eine dazu korrespondierende Bremsanforderung wie z.B. eine Auslenkung des Bremswertgebers, insbesondere eines Bremspedals, erfolgt. Der in das Betriebsbremssystem eingesteuerte Druck kann insbesondere über einen Achsmodulator-Drucksensor gemessen werden.

Mittels des Diagnoseablaufs kann eine korrekte Funktionsweise der Ausfallsicherheitsventileinheit vorteilhaft geprüft bzw. sichergestellt werden. Der Diagnoseablauf kann auf verschiedene Weise veranlasst werden. Zum einen kann bei einer im Betrieb des Fahrzeugs durch eine Bremsanforderung veranlassten Bremsung der Diagnoseablauf durchgeführt werden. Dies ist beispielsweise der Fall, wenn ein Fahrer über den Bremswertgeber - oder die Steuereinheit in einem automatischen Fahrbetrieb - eine elektronische Bremsanforderung an einen Achsmodulator sendet.

Insbesondere wird die Druckaussteuerung elektrisch oder elektronisch angefordert wird über die Steuereinheit und eine elektrische Achsmodulator-Steuerleitung, insbesondere eine elektrische Vorderachsmodulator-Steuerleitung oder elektrische Hinterachsmodulator-Steuerleitung. Insbesondere ist die Bremsanforderung eine elektrische oder elektronische Bremsanforderung.

Bei dem Verfahren gemäß dem vierten Aspekt der Erfindung werden die Vorteile der Ausfallsicherheitsventileinheit vorteilhaft genutzt.

Die Erfindung führt in einem fünften Aspekt zur Lösung der Aufgabe weiterhin auf ein Verfahren zum Betreiben eines Bremssystems mit einer Ausfallsicherheitsventileinheit für eine Ausfallbremsfunktion eines elektronisch steuerbaren pneumatischen Bremssystems, insbesondere gemäß dem zweiten Aspekt der Erfindung, für ein Fahrzeug oder ein Nutzfahrzeug, insbesondere gemäß dem dritten Aspekt der Erfindung, wobei die Ausfallsicherheitsventileinheit vorzugsweise nach einer der vorstehend beschriebenen bevorzugten Ausführungsformen einer Ausfallsicherheitsventileinheit gemäß dem ersten Aspekt der Erfindung ausgebildet ist.

Bei dem Verfahren gemäß dem fünften Aspekt der Erfindung sind die Schritte vorgesehen:
- Bereitstellen eines Signals zum Aussperren eines für eine Ausfallbremsung wirksamen Ausfallbremsdrucks durch eine Steuereinheit,
- Unterbrechen des Bereitstellens des Signals in einem Fehlerfall und/oder einem Stromausfall und/oder einem Diagnosefall der Steuereinheit, dadurch selbsttätiges Beenden des Aussperrens des Ausfallbremsdrucks zum Auslösen einer Ausfallbremsung des Fahrzeugs, aufweisend einen Diagnoseablauf mit dem Schritt:
- Ermitteln des Ausfallbremsdrucks, vorzugsweise mittels eines Drucksensors, am Ausfallbremsanschluss, wobei
- vor dem Unterbrechen des Bereitstellens des Signals, vorzugsweise in einem Diagnosefall der Steuereinheit, eine Druckaussteuerung im Betriebsbremssystem, vorzugsweise eine Bremsanforderung an einen Achsmodulator, angefordert wird.

Vorzugsweise ist vorgesehen, dass der Ausfallbremsdruck ein von einer Feststellbremsfunktion ausgesteuerter Feststellbremsdruck zum Belüften von Feststellbremszylindern oder ein von diesem abgeleiteter Druck ist.

Vorzugsweise ist vorgesehen, dass die Ausfallsicherheitsventileinheit pneumatisch von einem Bremskreis versorgt wird, der unabhängig von dem die Ausfallbremsung durchführenden Bremskreis des Betriebsbremssystems ist. Mit "pneumatisch versorgen" ist das Bereitstellen von Druckluft, insbesondere eines ersten Drucks, gemeint, die beim Öffnen des mindestens einen Ausfallbremsventils als Ausfallbremsdruck bereitgestellt wird.

Vorzugsweise wird die Ausfallsicherheitsventileinheit pneumatisch von einem Druckvorrat versorgt, der unabhängig von dem Druckvorrat des, die Ausfallbremsung durchführenden, Bremskreises des Betriebsbremssystems ist. Insbesondere wird der Ausfallbremsdruck von einem Druckvorrat des Feststellbremssystems oder einem weiteren Druckvorrat bereitgestellt.

Vorzugsweise ist vorgesehen, dass der Diagnoseablauf während einer Betriebsbremsung des Betriebsbremssystems, insbesondere während einer vorhandenen Bremsanforderung, durchgeführt wird. Während einer Betriebsbremsung wird eine Bremsanforderung an den die Bremsung durchführenden Achsmodulator gesendet. Eine solche Bremsanforderung ist insbesondere elektrisch oder elektronisch und kann von einem Bremswertgeber oder einer Steuereinheit, beispielsweise einer externen Steuereinheit und/oder einer Automatikbetrieb-Steuereinheit, bereitgestellt werden. In diesem Fall erfolgt kann vorteilhaft das Bereitstellen des Ausfallbremsdrucks erfolgen, da ohnehin eine Druckbeaufschlagung und ein entsprechend ansteigender, über den Achsmodulator-Drucksensor gemessener Druck erwartet wird. Auch der Effekt einer Ausfallbremsung durch das Bereitstellen des Ausfallbremsdrucks würde während einer Betriebsbremsung vorteilhaft nicht oder nur im geringen Maße auffallen, da ohnehin eine angeforderte Bremsung des Fahrzeugs erfolgt.

In anderen Weiterbildungen des Verfahrens wird der Diagnoseablauf alternativ oder zusätzlich während eines Stillstands des Fahrzeugs durchgeführt, wobei insbesondere eine Bremsanforderung, insbesondere von einer externen Steuereinheit und/oder einer Automatikbetrieb-Steuereinheit generiert wird. Während eines Stillstands würde eine Betätigung der Betriebsbremse, die durch das Bereitstellen des Ausfallbremsdrucks veranlasst wird, nicht auffallen, da sich das Fahrzeug im Stillstand befindet. Jedoch wird vorteilhaft auch in diesem Fall eine Bremsanforderung generiert wird, um einen Plausibilitätsfehler in der Steuereinheit des Bremssystems zu vermeiden.

Vorzugsweise ist vorgesehen, dass
- die Bremsanforderung von einem Bremswertgeber und/oder einer externen Steuereinheit und/oder einer Automatikbetrieb-Steuereinheit bereitgestellt wird. Insbesondere wird die Bremsanforderung über einen Fahrzeug-Datenbus bereitgestellt. Insbesondere ist die Bremsanforderung in Form eines CAN-Signals, insbesondere in Form eines XBR-Signals, ausgebildet.

Bei einer Weiterbildung des Verfahrens sind die Schritte vorgesehen:
- Bereitstellen eines Signals für ein einzelnes Ventil, insbesondere für ein einzelnes Ausfallbremsventil oder ein einzelnes Bistabilventil,
- Ermitteln des Ausfallbremsdrucks, insbesondere Plausibilisieren der Druckreaktion für das einzelne Ventil. In einer Weiterbildung kann das Verfahren zusätzlich den Schritt aufweisen: Plausibilisieren der Druckreaktion für ein Druckbegrenzungsventil.

Ein Plausibilisieren umfasst ein Prüfen, ob ein ermittelter Druckwert mit einem erwarteten Druckwert übereinstimmt. Eine Druckreaktion für ein Ventil ist insbesondere die Druckänderung oder die zu erwartende Druckänderung, die mit einem Ansteuern des Ventils einhergeht. Ein Plausibilisieren kann insbesondere ein Prüfen umfassen, ob kein Druck anliegt, das heißt ob der Druck gleich oder nahe null ist, weil die Ventile bei Ansteuerung bzw. bei Bereitstellen des Signals schließen (=nicht belüften) sollen. Auf diese Weise kann die Diagnose vorteilhaft differenziert werden, weil die Reaktion einzelner Ventile geprüft werden kann. Vorteilhaft werden zunächst sämtliche Ventile im nicht angesteuerten Zustand und/oder - insbesondere im Falle eines Bistabilventils - in ihrer Belüftungsstellung belassen. In diesem Falle sollte am Drucksensor der ausgesteuerte Ausfallbremsdruck gemessen werden. Falls dies nicht der Fall ist, wird ein Fehler ausgegeben. Im Anschluss können nacheinander die einzelnen Ventile der Ausfallsicherheitsventileinheit angesteuert werden, um die Reaktion zu überprüfen. Beispielsweise wird das Ausfallbremsventil durch ein Ansteuern in seine Sperrstellung geschaltet, wodurch der gemessene Druck abfallen sollte. Ist dies nicht der Fall, kann auf einen Fehler im Zusammenhang mit dem Ausfallbremsventil geschlossen werden, der beispielsweise in der Mechanik des Ventils, in dem Magnetteil oder in der Steuerleitung liegen kann. Eine derartige, einzelne Prüfung kann in analoger Weise für die übrigen Ventile, insbesondere ein weiteres Ausfallbremsventil und/oder ein Bistabilventil, durchgeführt werden.

Ein Diagnoseablauf bzw. ein Diagnosefall kann vorteilhaft in regelmäßigen Abständen automatisch durchgeführt werden, um die Funktion der Ausfallsicherheitsventileinheit zu überprüfen und sicherzustellen und insbesondere um schlafende Fehler in der Ausfallsicherheitsventileinheit frühzeitig zu ermitteln. Beispielsweise kann ein Diagnoseablauf bei jedem Start des Fahrzeugs, oder bei einem Start des Fahrzeugs nach einer festgelegten Anzahl an Starts, erfolgen. Insbesondere kann der Diagnoseablauf im Rahmen einer übergeordneten Selbstdiagnose des Fahrzeugs durchgeführt werden. Insbesondere kann der Diagnoseablauf bei einer Betriebsbremsung nach einer festgelegten Anzahl von Betriebsbremsungen oder bei einer Betriebsbremsung in festgelegten zeitlichen Abständen (beispielsweise einmal pro Tag oder einmal pro Woche oder einmal pro Monat) durchgeführt werden.

Bei dem Verfahren gemäß dem fünften Aspekt der Erfindung kann vorteilhaft zur Prüfung bzw. Sicherstellung der korrekten Funktionsweise der Ausfallsicherheitsventileinheit ein erster Druck am Hauptanschluss der Ausfallsicherheitsventileinheit bereitgestellt werden, der vorzugsweise von einer weiteren Druckquelle stammt, vorzugsweise einem Bremskreis oder Bremssystem , der bzw. das unabhängig von dem die Ausfallbremsung durchführenden, Bremskreis ist. Beispielsweise können für den Diagnoseablauf der erste Druck am Hauptanschluss ein ausgesteuerter Druck von einem Feststell-Bremsmodul oder von einem Anhängersteuermodul oder von einem Vorderachsmodulator oder von einem Hinterachsmodulator oder dergleichen Achsmodulator bereitgestellt werden.

Bei dem Verfahren gemäß dem fünften Aspekt der Erfindung werden die Vorteile der Ausfallsicherheitsventileinheit vorteilhaft genutzt.

Es soll verstanden werden, dass die Ausfallsicherheitsventileinheit gemäß dem ersten Aspekt der Erfindung, das elektronisch steuerbare pneumatische Bremssystem gemäß dem zweiten Aspekt der Erfindung, das Fahrzeug gemäß dem dritten Aspekt der Erfindung, Verfahren gemäß dem vierten Aspekt der Erfindung und das Verfahren gemäß dem fünften Aspekt der Erfindung gleiche und ähnliche Unteraspekte aufweisen, wie sie insbesondere in den abhängigen Ansprüchen niedergelegt sind. Insofern wird für die Weiterbildung eines Aspekts der Erfindung auch auf die Weiterbildungen der anderen Aspekte der Erfindung verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet. Die Erfindung ist nur durch den Umfang der beigefügten Ansprüche beschränkt.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: eine Ausfallsicherheitsventileinheit gemäß der Erfindung,
- Fig. 2A: die in Fig. 1 gezeigte Ausfallsicherheitsventileinheit im Detail,
- Fig. 2B, Fig. 2C, Fig. 2D, Fig. 2E: jeweils eine weitere bevorzugte Ausführungsform einer Ausfallsicherheitsventileinheit gemäß der Erfindung,
- Fig. 3: ein elektronisch steuerbares pneumatisches Bremssystem mit einer Ausfallsicherheitsventileinheit gemäß der Erfindung, und in
- Fig. 4: ein pneumatisches Schaltbild eines Achsmodulators für ein elektronisch steuerbares pneumatisches Bremssystem.

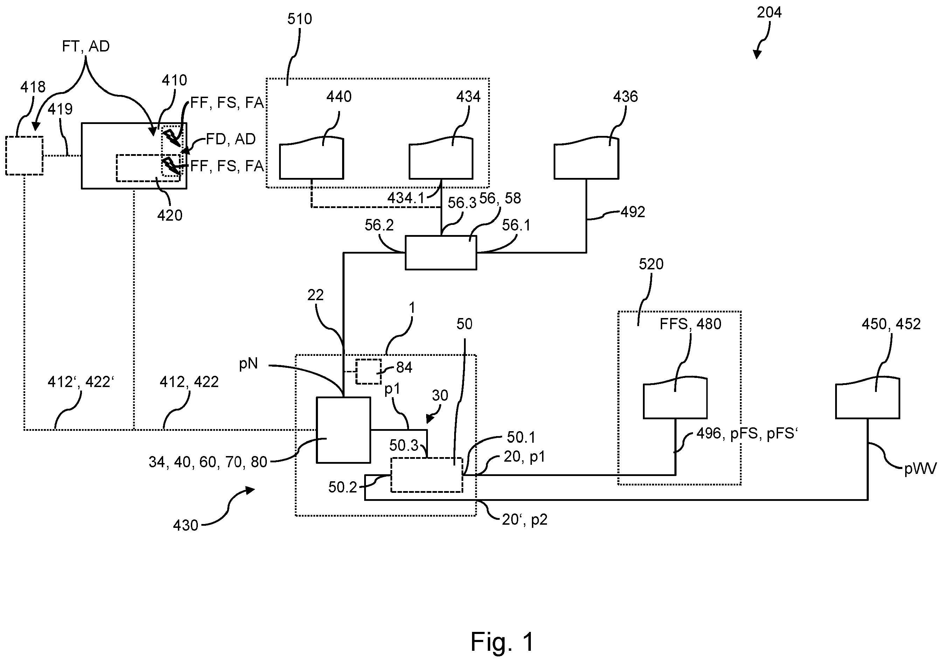

Fig. 1 zeigt eine Ausfallsicherheitsventileinheit 1 gemäß der Erfindung für ein elektronisch steuerbares pneumatisches Bremssystem 204. Die Ausfallsicherheitsventileinheit 1 weist eine Ventilhauptleitung 30 auf, die einen Hauptanschluss 20 und einen Ausfallbremsanschluss 22 pneumatisch verbindet. Die Ausfallsicherheitsventileinheit 1 weist mindestens ein Ausfallbremsventil 40 auf, das von einer Steuereinheit 410 steuerbar ist und im nicht angesteuerten, insbesondere stromlosen, Zustand in einer Öffnungsstellung 40A geöffnet ist, derart, dass ein am Hauptanschluss 20 anliegender erster Druck p1 als Ausfallbremsdruck pN an einem Ausfallbremsanschluss 22 bereitgestellt wird. Durch ein Bereitstellen des Ausfallbremsdrucks pN am Ausfallbremsanschluss 22 in der Öffnungsstellung 40A des Ausfallbremsventils 40 kann vorteilhaft in einem Fehlerfall FF, insbesondere bei einem Ausnahmefehler FA und/oder Stromausfall FS, der Steuereinheit 410 durch das Bremssystem 204, insbesondere durch das Betriebsbremssystem 510, eine Ausfallbremsung BA des Fahrzeugs 200 ausgelöst werden.

Die Ausfallsicherheitsventileinheit 1 ist vorteilhaft in einem separaten Ansteuerungszweig 430 angeordnet derart, dass der erste Druck p1 insbesondere von einem anderen Druckluftvorrat bereitgestellt wird als der Druckluftvorrat, der den Vorderachsmodulator 434 im normalen Betrieb versorgt.

Vorteilhaft ist der Hauptanschluss 20 pneumatisch mit dem Feststellbremssystem 520 verbunden. Insbesondere ist der Hauptanschluss 20 pneumatisch mit einer pneumatischen Feststellbremsleitung 496 des Feststellbremssystems 520 verbunden zum Empfangen eines Feststell-Bremsdrucks pFS. Alternativ oder zusätzlich kann der Hauptanschluss 20 ausgebildet sein zum Empfangen eines von dem Feststell-Bremsdruck pFS abgeleiteten Drucks pFS'.

Die Ausfallsicherheitsventileinheit 1 kann bevorzugt ein Auswahlventil 50 aufweisen, das insbesondere als ein Wechselventil 52 ausgebildet ist. Das Auswahlventil 50 ist ausgebildet, denjenigen Anschluss von einem ersten Auswahlventilanschluss 50.1 und einem zweiten Auswahlventilanschluss 50.2 mit einem dritten Auswahlventilanschluss 50.3 pneumatisch zu verbinden, an dem der höhere Druck anliegt.

Insbesondere kann in Ausführungsformen mit einem Auswahlventil 50 über einen weiteren Hauptanschluss 20' ein weiterer Vorratsdruck pWV von einer weiteren Druckluftquelle, insbesondere einem weiteren Druckluftvorrat 452 oder einem noch weiteren Druckluftvorrat 450, als zweiter Druck p2 bereitgestellt werden. Über das Auswahlventil 50 kann vorteilhaft sichergestellt werden, dass entweder der am Hauptanschluss 20 anliegende erste Druck p1 vom Feststellbremssystem 520 oder der am weiteren Hauptanschluss 20' anliegende zweite Druck p2 an die Ventilhauptleitung 30 weitergegeben wird, je nachdem, an welchem Auswahlventilanschluss 50.1, 50.2 der höhere Druck anliegt. Hierdurch wird vorteilhaft eine Redundanz erreicht, falls an einem der beiden Auswahlventilanschluss, beispielsweise aufgrund einer Leckage oder eines Systemausfalls keine Druckluft zur Verfügung stehen sollte.

Der Ausfallbremsanschluss 22 ist pneumatisch mit einer pneumatischen Vorderachsmodulator-Steuerleitung 492 verbunden, bevorzugt über ein weiteres Auswahlventil 56, welches insbesondere als Wechselventil 58 ausgebildet ist.

Das weitere Auswahlventil 56 ist an einem ersten weiteren Auswahlventilanschluss 56.1 über die pneumatische Vorderachsmodulator-Steuerleitung 492 mit dem Bremswertgeber 436 pneumatisch verbunden. Das weitere Auswahlventil 56 ist an einem zweiten weiteren Auswahlventilanschluss 56.2 mit dem mindestens einen Ausfallbremsventil 40, insbesondere mit dem Ausfallbremsanschluss 22, pneumatisch verbunden. Das weitere Auswahlventil 56 ist ausgebildet, denjenigen Auswahlventilanschluss 56.1, 56.2 mit einem dritten Auswahlventilanschluss 56.3 zu verbinden, an dem der höhere Druck anliegt. Der dritte Auswahlventilanschluss 56.3 ist über das Ausfallbremsventil 40 pneumatisch mit dem Betriebsbremssystem 510 verbunden zum Bereitstellen des Ausfallbremsdrucks pN. Insbesondere ist der dritte Auswahlventilanschluss 56.3 mit dem Vorderachsmodulator 434 des Betriebsbremssystems 510 über einen Steueranschluss 434.1 pneumatisch verbunden. Der Steueranschluss 434.1 kann insbesondere durch einen Redundanzanschluss 618 des Vorderachsmodulator 434 gebildet sein. In Ausführungsformen kann der dritte Auswahlventilanschluss 56.3 alternativ oder zusätzlich mit einem Bremszylinder 440 des Betriebsbremssystems 510 pneumatisch verbunden sein. In Ausführungsformen ohne weiteres Auswahlventil 56 ist der Ausfallbremsanschluss 22 direkt mit dem Betriebsbremssystem 510 verbunden.

Anstelle des Vorderachsmodulators 434 oder eines Bremszylinders 440 der Vorderachse 210 kann die Ausfallsicherheitsventileinheit 1 im Rahmen der Erfindung zwecks Ansteuerung gleichwohl pneumatisch mit anderen Elementen des pneumatischen Bremssystems 204, beispielsweise einem Hinterachsmodulator 438 und/oder einer Betriebsbremskammer 444 eines Feststellbremszylinder 442 oder dergleichen Bremszylinder verbunden sein. Der Feststellbremszylinder 442 ist vorzugsweise als Federspeicherbremszylinder ausgebildet. In optionalen Ausführungsformen kann das Bremssystem 204 und/oder die Steuereinheit 410 eine weitere Steuereinheit 420 aufweisen. Insbesondere kann die weitere Steuereinheit 420 elektrisch mit einer weiteren Energieversorgung 426 verbunden sein zwecks Versorgung mit elektrischer Energie.

In optionalen Ausführungsformen kann das Bremssystem 204 und/oder das Fahrzeug 200 eine externe Steuereinheit 418 aufweisen, die signal- und/oder energieleitend mit einem oder mehreren der Ventile 40, 60, 70 der Ausfallsicherheitsventileinheit 1 verbunden ist, insbesondere über eine alternative Steuerleitung 412' und eine alternative weitere Steuerleitung 422'. Die externe Steuereinheit 418 ist insbesondere zur Überwachung der Steuereinheit 410 mit dieser signalführend verbunden, insbesondere über eine Überwachungsleitung 419. Die externe Steuereinheit 418 kann insbesondere vorteilhaft durch eine andere elektronische Steuereinheit des Fahrzeugs oder als Teil einer solchen anderen elektronischen Steuereinheit gebildet sein. Eine solche andere elektronische Steuereinheit, insbesondere die externe Steuereinheit 418, kann insbesondere eine Automatikbetrieb-Steuereinheit 464, oder eine elektronische Steuereinheit eines Lenksystems, oder eine elektronische Steuereinheit eines Feststellbremssystems, oder eine elektronische Steuereinheit einer Luftaufbereitungsanlage sein. Eine Automatikbetrieb-Steuereinheit 464 kann insbesondere ein sogenannter virtueller Fahrer sein, der auf Basis von Sensordaten, Betriebsdaten, Routendaten, Solldaten und dergleichen Daten Fahrbefehle generiert und diese dem Fahrzeug bereitstellt. Fahrbefehle können Lenkbefehle, Beschleunigungsbefehle und Bremsbefehle, insbesondere eine Bremsanforderung AB, umfassen.

Ein Diagnoseablauf AD zum Prüfen der Funktionsweise der Ausfallsicherheitsventileinheit 1 kann vorteilhaft in einem Diagnosefall FT von einer elektronischen Steuereinheit, insbesondere der Steuereinheit 410 oder einer externen Steuereinheit 418, durchgeführt werden.

In sämtlichen Ausführungsformen kann die Ausfallsicherheitsventileinheit 1 optional einen Drucksensor 84 aufweisen, der insbesondere am Ausfallbremsanschluss 22 angeordnet oder pneumatisch mit diesem verbunden ist zum Messen des Ausfallbremsdrucks pN. Mittels eines Drucksensors 84 kann vorteilhaft die Druckreaktion und somit die Funktionsweise der Ausfallsicherheitsventileinheit 1 plausibilisiert und/oder geprüft werden.

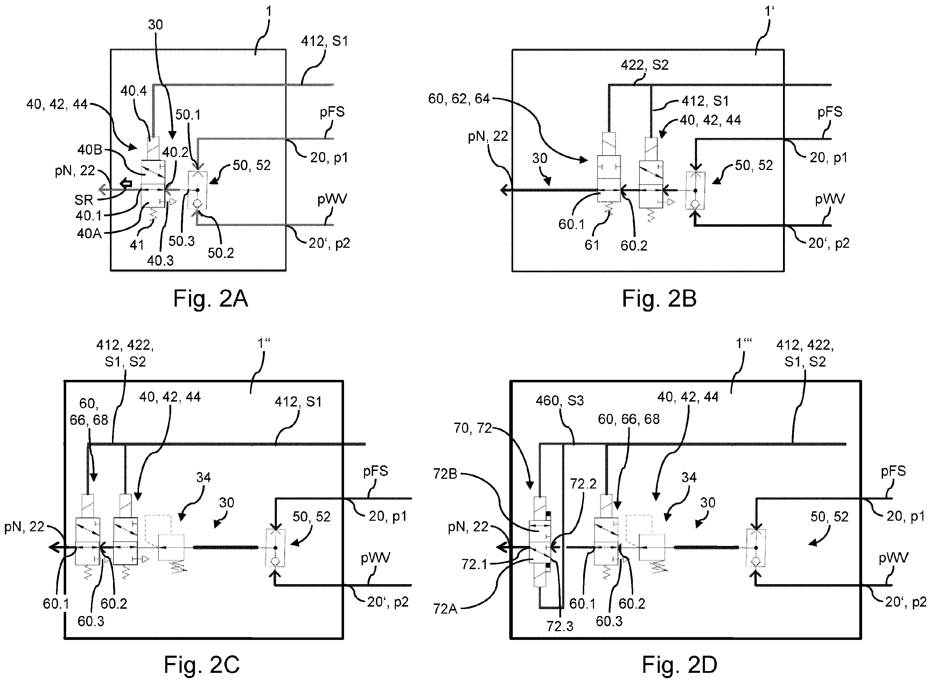

Fig. 2A zeigt die in Fig. 1 gezeigte Ausfallsicherheitsventileinheit 1 im Detail. Die Ausfallsicherheitsventileinheit 1 weist ein monostabiles Ausfallbremsventil 40 auf. Das Ausfallbremsventil 40 ist über eine Steuerleitung 412 signal- und energieführend mit der Steuereinheit 410 verbunden.

Das Ausfallbremsventil 40 ist vorliegend in einem nicht angesteuerten und stromlosen Zustand dargestellt, in dem es sich in einer Öffnungsstellung 40A befindet. In der Öffnungsstellung 40A ist eine pneumatische Verbindung zwischen einem ersten Ventilanschluss 40.1 und einem zweiten Ventilanschluss 40.2 des Ausfallbremsventils 40 hergestellt. Wenn sich das Ausfallbremsventil 40 in der Öffnungsstellung 40A befindet, kann ein Druckluftstrom in einer Strömungsrichtung SR vom Hauptanschluss 20 zum Ausfallbremsanschluss 22 zwecks Bereitstellung eines Ausfallbremsdrucks pN strömen.

Über ein Bereitstellen eines Steuersignals S1 über die Steuerleitung 412 kann das Ausfallbremsventil 40 aus der Öffnungsstellung 40A gegen den Widerstand einer Rückstellfeder 41 in eine Sperrstellung 40B geschaltet werden. In der Sperrstellung 40B wird eine pneumatische Verbindung zwischen dem ersten Ventilanschluss 40.1 und einem Entlüftungsanschluss 40.3 hergestellt. In einem normalen Betrieb des Fahrzeugs 200 ist insbesondere vorgesehen, dass sich das Ausfallbremsventil 40 in seiner Sperrstellung 40B befindet. In diesem Zustand besteht somit keine pneumatische Verbindung zwischen dem Hauptanschluss 20 und dem Ausfallbremsanschluss 22, da die pneumatische Verbindung an dem Ausfallbremsventil 40 unterbrochen ist.

Bei einem Fehlerfall FF, insbesondere wenn ein Steuersignal S1 ausbleibt - und ein Magnetteil 40.4 des Ausfallbremsventils 40 somit stromlos ist - geht das Ausfallbremsventil 40 durch die von der Rückstellfeder 41 erzeugte Rückstellkraft selbsttätig zurück in seine Öffnungsstellung 40A.

Ein solcher Fehlerfall FF kann beispielsweise durch einen Stromausfall FS entstehen, wenn die Steuereinheit 410 ohne Energieversorgung ist. In einem solchen Stromausfall wird entsprechend kein Steuersignal S1 an das Ausfallbremsventil 40 geleitet.

Des Weiteren kann sich ein Fehlerfall FF auch darin äußern, dass in der Steuereinheit 410 ein Ausnahmefehler FA auftritt, und von dem Steuergerät 410 als Fehlermaßnahme (insbesondere in Ermangelung anderer Programmalternativen) ein Nullsignal geschaltet wird, und somit - zum Schalten des Ausfallbremsventils 40 in die Öffnungsstellung 40A - das Steuersignale S1 absichtlich auf 0 gesetzt wird.

Ein Diagnosefall FT kann, vorzugsweise von der Steuereinheit, veranlasst werden um die Funktionsweise der Ausfallsicherheitsventileinheit zu überprüfen. Der Diagnosefall FT kann im Rahmen eines Diagnoseablaufs veranlasst werden. In einem Diagnosefall FT wird insbesondere ein Ansteuern der Ausfallbremsventile unterbrochen, indem das Bereitstellen des Signals S1, S2 beendet wird.

Fig. 2B zeigt eine weitere bevorzugte Ausführungsform einer Ausfallsicherheitsventileinheit 1' gemäß der Erfindung. Im Unterschied zu der in Fig. 2A gezeigten Ausführungsformen weist die hier gezeigte Ausfallsicherheitsventileinheit 1' ein weiteres Ausfallbremsventil 60 auf, dass in der Ventilhauptleitung 30 angeordnet und mit dem Ausfallbremsventil 40 pneumatisch in Reihe geschaltet ist. Das weitere Ausfallbremsventil 60 ist vorliegend als 2/2-Wegeventil 62, insbesondere als 2/2-Wege-Magnetventil 64 ausgebildet.

In anderen bevorzugten Ausführungsformen kann das weitere Ausfallbremsventil 60 ebenso als 3/2-Wegeventil 66, insbesondere als 3/2-Wege-Magnetventil 68 ausgebildet sein, wie beispielsweise in Fig. 2C gezeigt. Das weitere Ausfallbremsventil 60 ist insbesondere monostabil ausgebildet derart, dass es sich im nicht angesteuerten, insbesondere stromlosen, Zustand in einer weiteren Öffnungsstellung 60A befindet. Insbesondere weist das weitere Ausfallbremsventil 60 eine weitere Rückstellfeder 61 auf, welche das weitere Ausfallbremsventil 60 im nicht angesteuerten Zustand in die weitere Öffnungsstellung 60A bewegt. In der weiteren Öffnungsstellung 60A ist ein erster weiterer Ventilanschluss 60.1 des weiteren Ausfallbremsventils 60 mit einem zweiten weiteren Ventilanschluss 60.2 des weiteren Ausfallbremsventils 60 pneumatisch verbunden. Das weitere Ausfallbremsventil 60 wird insbesondere über ein weiteres Steuersignals S2 über eine weitere Steuerleitung 422, insbesondere von der Steuereinheit 410 oder einer weiteren Steuereinheit 420, angesteuert.

Eine Ausführungsform mit einem weiteren Ausfallventil 60 ist insbesondere vorteilhaft bei einem optionalen Bremssystem 204, das eine weitere Steuereinheit 420 oder dergleichen redundante Steuereinrichtung aufweist. In einem solchen Bremssystem 204 ist insbesondere die Steuereinheit 410 einem Primärsystem B1 und die weitere Steuereinheit 420 einer ersten Rückfallebene B2 zugeordnet. Bei einem Fehlerfall FF im Primärsystem B1, insbesondere in der Steuereinheit 410, kann somit weiterhin über die noch intakte Rückfallebene B2 die Ausfallsicherheitsventileinheit 1' angesteuert werden, insbesondere ein Bereitstellen des Ausfallbremsdrucks pN durch ein anhaltendes Ansteuern des weiteren Ausfallbremsventil 60 in der weiteren Sperrstellung 60B zurückgehalten werden. Mittels eines als 2/2-Wege-Magnetventil 64 ausgebildeten weiteren Ausfallbremsventils 60 ist insbesondere ein Modulieren des Ausfallbremsdrucks pN möglich. Dadurch wird vorteilhaft ein gestuftes Bremsen, insbesondere über einen Redundanzanschluss 618, auch bei einem Teilausfall ermöglicht, insbesondere wenn ein Primärsystem B1 ausgefallen ist, und eine Bremsfunktionalität über den separaten Ansteuerzweig durch die Ausfallsicherheitsventileinheit 1 gewährleistet wird.

Im Falle eines Doppelfehlers FD, das heißt wenn sowohl in der Steuereinheit 410, als auch in der weiteren Steuereinheit 420 ein Fehlerfall FF, insbesondere in Form eines Ausnahmefehlers FA und/oder eines Stromausfalls FS, vorliegt, fallen sowohl das Ausfallbremsventil 40 als auch das weitere Ausfallbremsventil 60 aufgrund ihres monostabilen Verhaltens jeweils in ihre Öffnungsstellung 40A, 60A, um einen Ausfallbremsdruck pN am Ausfallbremsanschluss 22 bereitzustellen.

In Fig. 2C ist eine noch weitere bevorzugte Ausführungsformen einer Ausfallsicherheitsventileinheit 1" dargestellt. Im Unterschied zu der in Fig. 2B gezeigten Ausführungsform ist vorliegend das weitere Ausfallbremsventil 60 als 3/2-Wegeventil 66, insbesondere als 3/2-Wege-Magnetventil 68 ausgebildet. Insbesondere sind das Ausfallbremsventil 40 und das weitere Ausfallbremsventil 60 vorteilhaft baugleich ausgebildet. Insbesondere weist das als 3/2-Wegeventil 66 ausgebildete weitere Ausfallbremsventil 60 einen weiteren Entlüftungsanschluss 60.3 auf, der in der Sperrstellung 60B mit dem ersten weiteren Ventilanschluss 60.1 verbunden ist. Über den weiteren Entlüftungsanschluss 60.3 kann der Ausfallbremsanschluss 22 vorteilhaft entlüftet werden, wenn das weitere Ausfallbremsventil 60 in seine Sperrstellung 60B geschaltet ist.

Vorteilhaft kann in sämtlichen Ausführungsformen ein in der Ventilhauptleitung 30 angeordnetes Druckbegrenzungsventil 34 vorhanden sein, wie in Fig. 2C dargestellt. Mittels eines Druckbegrenzungsventils 34 kann ein vordefinierter Luftdruck eingestellt werden, mit dem der Ausfallbremsdruck pN am Ausfallbremsanschluss 22 bereitgestellt wird, um eine geeignete Bremswirkung für das Fahrzeug bei der Ausfallbremsung zu erreichen.

In Ausführungsformen wird das weitere Ausfallbremsventil 60 insbesondere ebenfalls über das Steuersignal S1 gemeinsam mit dem Ausfallbremsventil 40 angesteuert. Insbesondere wird das weitere Ausfallbremsventil 60 gemeinsam mit dem Ausfallbremsventil 40 über die Steuerleitung 412, insbesondere gemeinsam mit dem Ausfallbremsventil 40 von der Steuereinheit 410, angesteuert. Eine mehrfache Anordnung von Ausfallbremsventilen 40 ,60, insbesondere eine Anordnung mit einem Ausfallbremsventil 40 und einem weiteren Ausfallbremsventil 60, hat den Vorteil einer Redundanz bei einem Ventilfehler, insbesondere einem mechanischen oder elektrischen Ventilfehler, bei einem der Ausfallbremsventile 40, 60. Sollte sich beispielsweise eines der Ausfallbremsventile 40, 60 aufgrund eines Verklemmens oder eines defekten Magnetteils nicht mehr ansteuern lassen und aus der Öffnungsstellung 40A, 60A in die Sperrstellung 40B, 60B bewegen lassen, würde sich das Fahrzeug unbeabsichtigt in einem Zustand einer durch die Ausfallsicherheitsventileinheit 1" hervorgerufenen Ausfallbremsung BA befinden. Durch das weitere, noch funktionierende Ausfallbremsventil kann dieser unbeabsichtigte Zustand behoben und/oder verhindert werden.

In Fig. 2D ist eine noch weitere bevorzugte Ausführungsformen einer Ausfallsicherheitsventileinheit 1‴ mit einem Bistabilventil 72 dargestellt. Vorteilhaft kann in sämtlichen Ausführungsformen ein in der Ventilhauptleitung 30 angeordnetes Bistabilventil 72 vorhanden sein, wie in Fig. 2C dargestellt.

Das Bistabilventil 72 ist insbesondere über eine noch weitere Steuerleitung 460 signal- und/oder energieführend mit einer Steuerung, insbesondere der Steuereinheit 410 oder einer weiteren Steuereinheit 420 oder einer hier nicht gezeigten, noch weiteren Steuereinheit, verbunden und über ein drittes Steuersignal S3 steuerbar. Das Bistabilventil 72 hat die Eigenschaft, dass es von einem Fehlerfall FF nicht direkt beeinflusst wird, weil es aufgrund seiner bistabilen Eigenschaft in einer vorher geschalteten Stellung verharrt.

Im Unterschied dazu haben das Ausfallbremsventil 40 und das weitere Ausfallbremsventil 60 aufgrund ihres monostabiles Verhaltens die Eigenschaft, in einem stromlosen Zustand in eine Stellung, vorliegend jeweils die Öffnungsstellung 40A, 60A, zurückzufallen. Auf diese Weise kann gemäß der Erfindung in einem Fall, in dem am Ausfallbremsventil 40, insbesondere auch am weiteren Ausfallbremsventil 60 kein Steuersignal S1, S2 oder das Steuersignal S1, S2 als ein Nullsignal anliegt, ein selbsttätiges Schalten der Ausfallbremsventile 40, 60 in ihre Öffnungsstellung 40A, 60A erreicht werden. Ein solcher Fall eines ausbleibenden Steuersignals S1, S2 oder Nullsignals tritt insbesondere bei einem Ausnahmefehler FA oder Stromausfall FS in den Steuereinheiten 410, 420 auf.

Wenn sich das Bistabilventil 72 in seiner zweiten Stellung 72B befindet, ist dies insbesondere geeignet für einen automatischen, insbesondere autonomen Fahrbetrieb des Fahrzeugs 200, weil in diesem Fall eine pneumatische Verbindung zwischen einem ersten und zweiten Bistabilventilanschluss 72.1, 72.2 hergestellt ist und auf diese Weise - im Falle eines Zurückfallens der Ausfallbremsventile 40, 60 in ihre Öffnungsstellung 40A, 60A - ein Ausfallbremsdruck pN am Ausfallbremsanschluss 22 zwecks Bremsung des Fahrzeugs 200 bereitgestellt wird. In einem automatischen, insbesondere autonomen Fahrbetrieb kann das Fahrzeug 200 beispielsweise durch eine Automatikbetrieb-Steuereinheit 464 gesteuert werden, die mit dem Fahrzeug-Datenbus 462 signalleitend verbunden ist.

Wenn sich das Bistabilventil 72 in seiner ersten Stellung 72A befindet, ist dies insbesondere geeignet für einen manuellen Fahrbetrieb des Fahrzeugs 200. In diesem Fall wird durch ein Sperren der Ventilhauptleitung 30 verhindert, dass in einem Fehlerfall FF, insbesondere im Fall eines Doppelfehlers FD, eine Ausfallbremsung durch Bereitstellen eines Ausfallbremsdrucks pN am Ausfallbremsanschluss 22 durchgeführt wird.

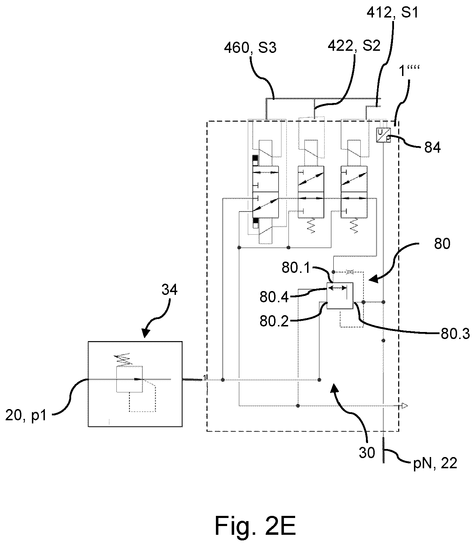

In Fig. 2E ist eine noch weitere bevorzugte Ausführungsformen einer Ausfallsicherheitsventileinheit 1"" mit einem Drucksensor 84 dargestellt. Der Drucksensor 84 ist vorliegend am Ausfallbremsanschluss 22 angeordnet und ausgebildet zum Messen des bereitgestellten Ausfallbremsdrucks pN. Mittels eines Drucksensors 84 kann vorteilhaft die Druckreaktion und somit die Funktionsweise der Ausfallsicherheitsventileinheit 1 plausibilisiert und/oder geprüft werden.

In sämtlichen Ausführungsformen kann weiterhin ein Ausfall-Relaisventil 80 vorgesehen sein. Das Ausfall-Relaisventil 80 weist einen Ausfall-Steueranschluss 80.1, einen Ausfall-Vorratsanschluss 80.2, einen Ausfall-Arbeitsanschluss 80.3 und einen Ausfall-Entlüftungsanschluss 80.4 auf. Der Ausfall-Vorratsanschluss 80.2 ist mit dem Hauptanschluss 20 pneumatisch verbunden. Der Ausfall-Steueranschluss 80.1 ist mit der Ventilhauptleitung 30 verbunden derart, dass die Ventilhauptleitung einschließlich sämtlicher Ausfallbremsventile 40, 60 und etwaiger Bistabilventile 72 die Steuerleitung des Ausfall-Relaisventils 80 bilden. Der Ausfall-Arbeitsanschluss 80.3 ist mit dem Ausfallbremsanschluss 22 pneumatisch verbunden. Das Ausfall-Relaisventil 80 wirkt luftmengenverstärkend, weshalb die von den Ausfallbremsventilen und ggf. von dem Bistabilventil zu schaltenden Luftmengen vorteilhaft geringer sind, und folglich diese Ventile kleiner dimensioniert werden können und/oder weniger beansprucht werden.

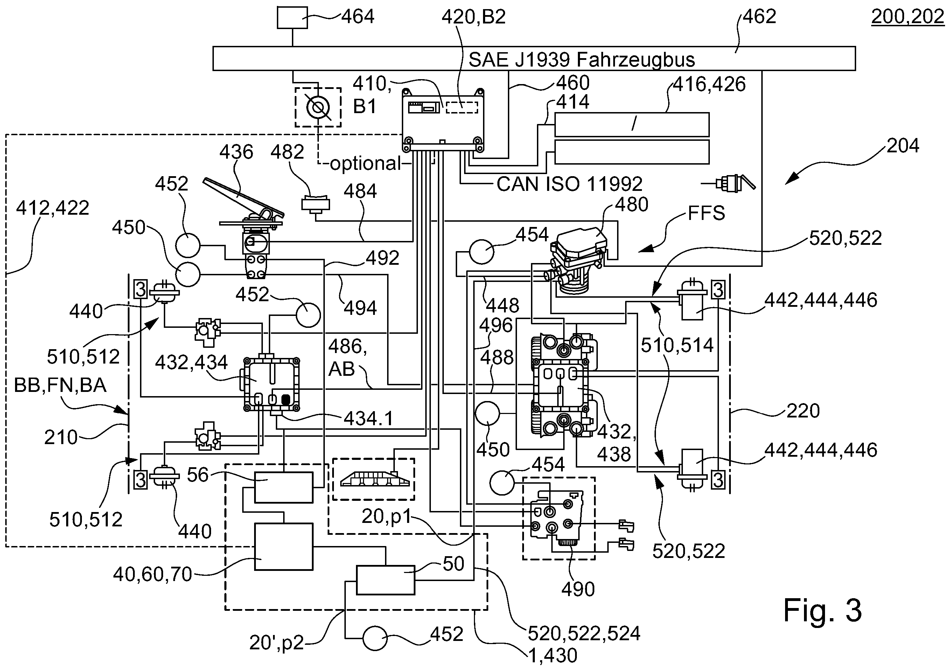

Fig. 3 zeigt ein elektronisch steuerbares pneumatisches Bremssystem 204 mit einer Ausfallsicherheitsventileinheit 1 für eine Ausfallbremsfunktion FN gemäß der Erfindung. Das elektronisch steuerbare pneumatische Bremssystem 204 ist vorliegend in einem als Nutzfahrzeug 202 ausgebildeten Fahrzeug 200 eingesetzt, welches hier stark schematisch dargestellt ist, insbesondere mit einer angedeuteten Vorderachse 210 und einer angedeuteten Hinterachse 220.

Das elektronisch steuerbare pneumatische Bremssystem 204 wird über eine Steuereinheit 410 gesteuert. Die Steuereinheit 410 ist über eine Versorgungsleitung 414 mit einer Energieversorgung 416 energieführend verbunden. Die Steuereinheit 410 ist über eine Bremswertgeber-Steuerleitung 484 elektrisch signalleitend mit einem Bremswertgeber 436 verbunden zum Empfangen von Bremssignalen. Die Steuereinheit 410 ist weiter ausgebildet, in Abhängigkeit der Bremssignale, oder in Abhängigkeit etwaiger Fahrprogramme einer Automatikbetrieb-Steuereinheit 464 in einem automatischen Fahrbetrieb, einen Vorderachsmodulator 434 über eine elektrisch signalführende Vorderachsmodulator-Steuerleitung 486 anzusteuern. Insbesondere kann über die Vorderachsmodulator-Steuerleitung 486 eine elektrische oder elektronische Bremsanforderung AB an den Achsmodulator 432 eine Bremsung ausgelöst werden. Eine elektronische Bremsanforderung AB kann insbesondere durch einen CAN- und/oder XBR-Befehl gebildet sein. Der Vorderachsmodulator 434 ist ausgebildet, in Abhängigkeit dieses Ansteuerns einen pneumatischen Vorderachsbremskreis 512 eines Betriebsbremssystems 510 des elektronisch steuerbaren pneumatischen Bremssystems 204 mit Druckluft aus einem weiteren Druckluftvorrat 452 zu versorgen, um mindestens einen, einem Vorderrad 212 zugeordneten, Betriebsbremszylinder 440 zum Ausführen einer Betriebsbremsung BB zu aktuieren. Die Steuereinheit 410 ist weiter ausgebildet, jeweils eine Betriebsbremskammer 444 mindestens eines, einem Hinterrad 222 zugeordneten, Feststellbremszylinders 442 über einen pneumatischen Hinterachsbremskreis 514 über ein pneumatisches Ansteuern zu aktuieren. Die Steuereinheit 410 ist über eine Hinterachsmodulator-Steuerleitung 488 elektrisch signalführend mit einem Hinterachsmodulator 438 verbunden. Die Druckluft für den pneumatischen Hinterachsbremskreis 514 wird dabei von einem noch weiteren Druckluftvorrat 450 bereitgestellt und über den Hinterachsmodulator 438 bei einem Ansteuern durch die Steuereinheit 410 an die Betriebsbremskammern 444 geleitet. Die Steuereinheit 410 ist somit ausgebildet, sowohl die Vorderräder 212 als auch die Hinterräder 222 des Fahrzeugs 204 zu bremsen. Die Vorderachsmodulator-Steuerleitung 486 und/oder die Hinterachsmodulator-Steuerleitung 488 sind insbesondere als Fahrzeug-Datenbus-Leitungen, insbesondere CAN-Leitungen, ausgebildet.

Das Bremssystem 204 weist eine Feststellbremsfunktion FFS mit einem Feststellbrems-Modul 480 auf. Die Feststellbremsfunktion FFS wird vorzugsweise mittels eines Feststellbremssystems 520 und/oder des Feststellbrems-Modul 480 umgesetzt. Durch die einer Feststellbremsfunktion FFS kann ein Feststellbremsdruck pFS zum Belüften von Feststellbremszylindern 442 ausgesteuert werden. Demnach umfasst die Feststellbremsfunktion FFS vorzugsweise ein Feststellbrems-Modul 480. Das Feststellbrems-Modul 480 des Bremssystems 204 ist ausgebildet, eine Feststellbremskammer 446 eines der beiden jeweils dem Hinterrad 222 zugeordneten Feststellbremszylinders 442 über einen pneumatischen Hinterachsbremskreis 522 des Feststellbremssystems 520, insbesondere über eine pneumatische Feststellbremsleitung 496, mittels eines ausgesteuerten Feststell-Bremsdrucks pFS zu aktuieren. Das Feststellbrems-Modul 480 ist elektrisch signalführend mit einem Feststellbrems-Bedienelement 482 verbunden. Über das Feststellbrems-Bedienelement 482 kann somit der pneumatische Hinterachsbremskreis 522 des Feststellbremssystems 520 aktiviert und deaktiviert werden. Das Feststellbrems-Modul 480 ist über eine Vorratsleitung 448 mit dem Druckluftvorrat 454 zwecks Versorgung mit Druckluft pneumatisch verbunden.

Der Hinterachsmodulator 438 ist über die Hinterachsmodulator-Steuerleitung 488 signalführend mit der Steuereinheit 410 verbunden. Die Druckluft für das Feststellbremssystem 520 wird dabei von einem Druckluftvorrat 454 bereitgestellt.

Der Bremswertgeber 436 ist über eine pneumatische Vorderachsmodulator-Steuerleitung 492 pneumatisch mit einem pneumatischen Steueranschluss 434.1, insbesondere einem Redundanzanschluss 618, des Vorderachsmodulators 434 verbunden, um den pneumatischen Vorderachsbremskreis 512 anzusteuern. Der Vorderachsmodulator 434 ist insbesondere ausgebildet, bei einer pneumatischen Druckbeaufschlagung über die Vorderachsmodulator-Steuerleitung 492 einen Bremsdruck an die Betriebsbremszylinder 440 auszusteuern. Der Bremswertgeber 436 ist über eine pneumatische Hinterachsmodulator-Steuerleitung 494 - in analoger Weise zum Vorderachsmodulator 434 - pneumatisch mit dem Hinterachsmodulator 438 verbunden, um den pneumatischen Hinterachsbremskreis 514 anzusteuern. Der Hinterachsmodulator 438 ist insbesondere ausgebildet, bei einer pneumatischen Druckbeaufschlagung über die pneumatische Hinterachsmodulator-Steuerleitung 494 einen Bremsdruck an die Betriebsbremskammern 444 auszusteuern. Insbesondere weisen der Vorderachsmodulator 434 und/oder der Hinterachsmodulator 438 zum Aussteuern eines Bremsdrucks ein Relaisventil 602 auf.

Der Hauptanschluss 20 der Ausfallsicherheitsventileinheit 1 ist über die pneumatische Feststellbremsleitung 496 pneumatisch mit dem Feststellbrems-Modul 480 und dem pneumatischen Hinterachsbremskreis 522 des Feststellbremssystems 520 verbunden. Ein weiteres Auswahlventil 56 ist vorteilhaft in der pneumatischen Vorderachsmodulator-Steuerleitung 492 angeordnet zum pneumatischen Verbinden des Ausfallbremsanschluss 22 mit einem Steuereingang des Vorderachsmodulators 434.

Das Ausfallbremsventil 40 ist über eine Steuerleitung 412 mit der Steuereinheit 410 signal- und energieführend verbunden. Das Fahrzeug 200 kann eine weitere Druckregeleinrichtung 489, hier in Form eines Anhängersteuermoduls 490 zur pneumatischen Versorgung eines hier nicht dargestellten Anhängers des Fahrzeugs 200 aufweisen.

Bei einem Bereitstellen eines Ausfallbremsdrucks pN am Ausfallbremsanschluss 22 gelangt der Ausfallbremsdrucks pN an den Vorderachsmodulator 434, wodurch der Vorderachsmodulator 434 zwei, jeweils der Vorderachse 210 zugeordnete Betriebsbremszylinder 440 pneumatisch aktuiert. Die Betriebsbremszylinder 440 werden somit durch Beaufschlagung des Vorderachsmodulators 434 mit dem Ausfallbremsdruck pN aktuiert, wodurch eine Ausfallbremsung BA der Vorderachse 210 und somit des Fahrzeugs 200 erreicht wird. Die Ausfallsicherheitsventileinheit 1 ist in einem separaten Ansteuerzweig 430 des elektronisch steuerbaren pneumatischen Bremssystems 204 angeordnet, der unabhängig zu der regulären Ansteuerung der Betriebsbremszylinder 440, insbesondere über einen Bremswertgeber 436, bereitgestellt wird. Gleichwohl ist im Rahmen der Erfindung auch eine Bereitstellung eines Ausfallbremsdrucks pN direkt an mindestens einen Betriebsbremszylinder 440, oder für einen anderen Bremszylinder, beispielsweise an die Betriebsbremskammer 444 der den Hinterrädern 222 zugeordneten Feststellbremszylinder 442, möglich. Insbesondere ist der Druckluftvorrat 454, der das Feststell-Bremsmodul 480 versorgt, separat von einem weiteren Druckluftvorrat 452, der im Normalbetrieb Druckluft für die Betriebsbremszylinder 440 vorhält, um die Unabhängigkeit der Ausfallsicherheitsventileinheit 1 zu erhöhen, und auf diese Weise vorteilhaft eine redundante Ausfallbrems-Funktionalität bereitzustellen.

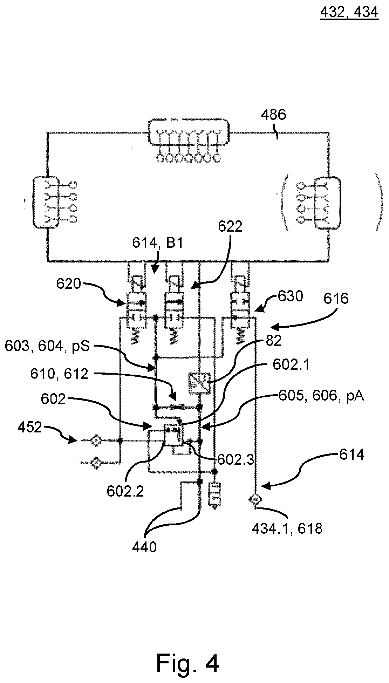

Fig. 4 zeigt ein pneumatisches Schaltbild eines Achsmodulators 432, insbesondere eines Vorderachsmodulators 434. Der Achsmodulator 432 weist ein Relaisventil 602 auf, welches über eine Steuerleitung 604 und einen Ventilsteueranschluss 602.1 mit einem Steuerdruck beaufschlagt werden kann, um an einem Arbeitsanschluss 602.3 einen Arbeitsdruck auszusteuern. Dem Relaisventil 602 wird über einen Vorratsanschluss 602.2 Druckluft bereitgestellt, insbesondere von einem weiteren Druckluftvorrat 452. Der Arbeitsanschluss 602.3 ist insbesondere pneumatisch über eine Arbeitsleitung 606 mit den Betriebsbremszylindern 440 der Vorderachse 210 verbunden. Die Steuerleitung 604 weist einen elektrischen Ansteuerzweig 614 mit einem ersten Ansteuerventil 620 und einem zweiten Ansteuerventil 622 auf, der ausgebildet ist, den Ventilsteueranschluss 602.1 zu belüften und/oder zu entlüften. Der elektrische Ansteuerzweig 614 mit den Ansteuerventilen 620, 622 sind insbesondere durch die Steuereinheit 410 und/oder das Primärsystem B1 steuerbar, insbesondere über die Vorderachsmodulator-Steuerleitung 486. Die Steuerleitung 604 weist einen pneumatischen Ansteuerzweig 616 auf mit einem Backupventil 630. Der Ventilsteueranschluss 602.1 ist pneumatisch über den pneumatischen Ansteuerzweig 616 mit einem Steueranschluss 434.1 verbunden. Der Steueranschluss 434.1 ist insbesondere als Redundanzanschluss 618 des Vorderachsmodulator 434 ausgebildet. Das Backupventil 630 ist insbesondere als 2/2-Wegeventil und monostabil normal öffnend ausgebildet, um im Falle eines Fehlerfalls FF bei ausbleibender Ansteuerung zu öffnen, und eine pneumatische Ansteuerung über den pneumatischen Ansteuerzweig 616 zu ermöglichen. Die Ansteuerventile 620, 622 des elektrischen Ansteuerzweig 614 insbesondere entsprechend als 2/2-Wegeventil und monostabil normal schließend ausgebildet. Der Achsmodulator 432 weist einen Achmodulator-Drucksensor 82 auf, der hier in der Arbeitsleitung 606 zum Messen des Arbeitsdrucks pA angeordnet ist.

Vorteilhaft weist der Vorderachsmodulator 434 eine Drossel 610, insbesondere eine Abdüsungsbohrung 612 auf, welche die Arbeitsleitung 606 pneumatisch mit der Steuerleitung 604 verbindet. Die Drossel 610 weist eine gegenüber der Steuerleitung 604 und/oder der Arbeitsleitung 606 reduzierte Nennweite auf.

Die Drossel 610 ist insbesondere in einem Relaiskolben des Relaisventils 602 angeordnet, insbesondere als Abdüsungsbohrung 612 in dem Relaiskolben. Mittels einer Drossel kann vorteilhaft sichergestellt werden, dass - unabhängig von einer möglicherweise verfügbaren Bleed-Back-Funktion und/oder Leckagen oder einem Druckverlust am Vorderachsbremskreis - die Feststellbremse automatisch entlüftet wird und somit ein sicherer Zustand des Fahrzeugs durch einen Stillstand des Fahrzeugs dauerhaft gewährleistet werden kann. Mittels einer derartigen Drossel kann das Einfallen der Feststellbremszylinder 442 vorteilhaft auch in dem Fall einer Leckage in einer Arbeitsleitung 606 oder einem pneumatisch mit der Arbeitsleitung 606 verbundenen Teil gewährleistet werden. Mittels einer derartigen Drossel wird eine pneumatische Verbindung zwischen dem Arbeitsdruck führenden Teil des Achsmodulators 432, insbesondere der Arbeitsleitung 606, und dem Steuerdruck führende Teil des Achsmodulators 432, insbesondere der Steuerleitung 604, geschaffen. Eine Leckage in einem einen Arbeitsdruck pA führenden Teil 605 führt somit zu einem Druckabfall auch in einem, einen Steuerdruck pS führenden Teil 603, und in dem Fall durch die pneumatische Verbindung des Steuerdruck führenden Teils mit der erfindungsgemäßen Ausfallsicherheitsventileinheit zu einem Einfallen der Feststellbremse. Insbesondere ist die Drossel in einem Relaiskolben des Relaisventils 602 des Achsmodulators 432 vorgesehen.

Die hier für den Vorderachsmodulator 434 gemachten Angaben können in anderen Ausführungsformen der Erfindung in gleicher Weise für einen anderen Achsmodulator 432, beispielsweise einen Hinterachsmodulator 438 zutreffen.

### Bezugszeichenliste (Bestandteil der Beschreibung)

- 1, 1', 1", 1‴, 1"": Ausfallsicherheitsventileinheit
- 20: Hauptanschluss
- 22: Ausfallbremsanschluss
- 30: Ventilhauptleitung
- 34: Druckbegrenzungsventil
- 40: monostabiles Ausfallbremsventil
- 40.1: erster Ventilanschluss des Ausfallbremsventils
- 40.2: zweiter Ventilanschluss des Ausfallbremsventils
- 40.3: Entlüftungsanschluss des Ausfallbremsventils
- 40.4: erstes Magnetteil, Magnetteil des Ausfallbremsventils
- 40A: Öffnungsstellung des Ausfallbremsventils, Öffnungsstellung
- 40B: Sperrstellung des Ausfallbremsventils, Sperrstellung
- 41: Rückstellfeder, Rückstellfeder des Ausfallbremsventils
- 50: Auswahlventil
- 50.1: erster Anschluss des Auswahlventils
- 50.2: zweiter Anschluss des Auswahlventils
- 50.3: dritter Anschluss des Auswahlventils
- 52: Wechselventil, Select-High-Wechselventil
- 56: weiteres Auswahlventil
- 56.1: erster Anschluss des weiteren Auswahlventils
- 56.2: zweiter Anschluss des weiteren Auswahlventils
- 56.3: dritter Anschluss des weiteren Auswahlventils
- 58: weiteres Wechselventil, weiteres Select-High-Wechselventil
- 60: weiteres monostabiles Ausfallbremsventil
- 60.1: erster Ventilanschluss des weiteren Ausfallbremsventils
- 60.2: zweiter Ventilanschluss des weiteren Ausfallbremsventils
- 60.3: Entlüftungsanschluss des weiteren Ausfallbremsventils
- 60.4: weiteres Magnetteil, Magnetteil des weiteren Ausfallbremsventils
- 60A: Öffnungsstellung des weiteren Ausfallbremsventils, weitere Öffnungsstellung
- 60B: Sperrstellung des weiteren Ausfallbremsventils, weitere Sperrstellung
- 61: weitere Rückstellfeder, Rückstellfeder des weiteren Ausfallbremsventils
- 70: Bistabilventileinheit
- 72: Bistabilventil
- 72.1: erster Bistabilventilanschluss
- 72.2: zweiter Bistabilventilanschluss
- 72.3: Entlüftung des Bistabilventils
- 72A: Erste Stellung des Bistabilventils
- 72B: Zweite Stellung des Bistabilventils
- 80: Ausfall-Relaisventil
- 80.1: Ausfall-Steueranschluss
- 80.2: Ausfall-Vorratsanschluss
- 80.3: Ausfall-Arbeitsanschluss
- 80.4: Ausfall-Entlüftungsanschluss
- 82: Achsmodulator-Drucksensor
- 84: Drucksensor
- 200: Fahrzeug
- 202: Nutzfahrzeug
- 204: Bremssystem, elektronisch steuerbares pneumatisches Bremssystem
- 210: Vorderachse
- 220: Hinterachse
- 410: Steuereinheit
- 412: Steuerleitung
- 412': alternative Steuerleitung
- 414: Versorgungsleitung
- 416: Energieversorgung
- 418: externe Steuereinheit
- 419: Überwachungsleitung
- 420: weitere Steuereinheit
- 422: weitere Steuerleitung
- 422': alternative weitere Steuerleitung
- 426: weitere Energieversorgung
- 430: separater Ansteuerzweig
- 432: Achsmodulator
- 434: Vorderachsmodulator
- 436: Bremswertgeber
- 438: Hinterachsmodulator
- 440: Betriebsbremszylinder
- 442: Feststellbremszylinder
- 444: Betriebsbremskammer des Feststellbremszylinders
- 446: Feststellbremskammer des Feststellbremszylinders
- 448: Vorratsleitung, Feststellbremssystem-Vorratsleitung
- 450: noch weiterer Druckluftvorrat
- 452: weiterer Druckluftvorrat
- 454: Druckluftvorrat
- 460: noch weitere Steuerleitung, Fahrzeug-Datenbus-Leitung
- 462: Fahrzeug-Datenbus
- 464: Automatikbetrieb-Steuereinheit
- 480: Feststellbrems-Modul
- 482: Feststellbrems-Bedienelement
- 484: elektrische Bremswertgeber-Steuerleitung
- 486: elektrische Vorderachsmodulator-Steuerleitung
- 488: elektrische Hinterachsmodulator-Steuerleitung
- 489: Druckregeleinrichtung
- 490: Anhängersteuermodul
- 492: pneumatische Vorderachsmodulator-Steuerleitung
- 494: pneumatische Hinterachsmodulator-Steuerleitung
- 496: pneumatische Feststellbremsleitung
- 510: Betriebsbremssystem
- 512: pneumatischer Vorderachsbremskreis des Betriebsbremssystems
- 514: pneumatischer Hinterachsbremskreis des Betriebsbremssystems
- 516: Redundanzkreis des Betriebsbremssystems
- 520: Feststellbremssystem
- 522: pneumatischer Hinterachsbremskreis des Feststellbremssystems
- 524: Bypass-Versorgungszweig des Feststellbremssystems
- 602: Relaisventil
- 602.1: Ventilsteueranschluss des Relaisventils
- 602.2: Vorratsanschluss des Relaisventils
- 602.3: Arbeitsanschluss des Relaisventils
- 603: Steuerdruck führender Teil
- 604: Steuerleitung
- 605: Arbeitsdruck führender Teil
- 606: Arbeitsleitung
- 610: Drossel
- 612: Abdüsungsbohrung
- 614: elektrischer Ansteuerzweig
- 616: pneumatischer Ansteuerzweig
- 618: Redundanzanschluss
- 620: erstes Ansteuerventil
- 622: zweites Ansteuerventil
- 630: Backupventil

- AB: Bremsanforderung
- AD: Diagnoseablauf
- B1: Primärsystem
- B2: ersten Rückfallebene
- BA: Ausfallbremsung
- BB: Betriebsbremsung
- FA: Ausnahmefehler
- FD: Doppelfehler
- FF: Fehlerfall
- FFS: Feststellbremsfunktion
- FN: Ausfallbremsfunktion
- FS: Stromausfall
- FT: Diagnosefall
- p1: erster Druck
- p2: zweiter Druck
- pA: Arbeitsdruck
- pB: Begrenzungsdruck
- pE: Einstelldruck
- pFS: Feststell-Bremsdruck
- pFS': vom Feststell-Bremsdruck abgeleiteter Druck
- pN: Ausfallbremsdruck
- pS: Steuerdruck
- pWV: weiterer Vorratsdruck
- S1: erstes Steuersignal
- S2: zweites Steuersignal
- S3: drittes Steuersignal
- SR: Strömungsrichtung

## Patentansprüche

1. Ausfallsicherheitsventileinheit (1) für eine Ausfallbremsfunktion (FN) eines elektronisch steuerbaren pneumatischen Bremssystems (204) für ein Fahrzeug (200), insbesondere ein Nutzfahrzeug (202), wobei das Bremssystem (204) mindestens eine Steuereinheit (410) aufweist, und die Ausfallsicherheitsventileinheit (1) aufweist:
- einen, einen ersten Druck (p1) bereitstellenden, Hauptanschluss (20) und einen Ausfallbremsanschluss (22),
- ein als monostabiles Ventil ausgebildetes Ausfallbremsventil (40), das von der Steuereinheit (410) oder einer externen Steuereinheit (418) steuerbar ist, und ausgebildet ist,
- den Hauptanschluss (20) und den Ausfallbremsanschluss (22) in einer Öffnungsstellung (40A) zur Aussteuerung eines Ausfallbremsdrucks (pN) am Ausfallbremsanschluss (22) pneumatisch zu verbinden,
**dadurch gekennzeichnet, dass**
- in einem Fehlerfall (FF) und/oder Stromausfall (FS) und/oder Diagnosefall (FT) der Steuereinheit (410) das Ausfallbremsventil (40) in der Öffnungsstellung (40A) ist, und dass
- über das Bereitstellen des Ausfallbremsdrucks (pN) am Ausfallbremsanschluss (22) durch das Bremssystem (204) eine Ausfallbremsung (BA) des Fahrzeugs (200) ausgelöst wird, wobei
- der Hauptanschluss (20) zum Empfangen eines ausgesteuerten Feststell-Bremsdrucks (pFS) als erster Druck (p1) pneumatisch mit einer Feststellbremsfunktion (FFS) verbunden ist.

2. Ausfallsicherheitsventileinheit (1) nach Anspruch 1, **dadurch gekennzeichnet, dass**
- die Ausfallsicherheitsventileinheit (1) ein Auswahlventil (50) mit einem ersten Anschluss (50.1) aufweist, der zum Empfangen des ersten Drucks (p1) mit der Feststellbremsfunktion (FFS) pneumatisch verbunden ist,
- mit einem zweiten Anschluss (50.2), der zum Empfangen eines weiteren Vorratsdrucks (pWV) als zweiter Druck (p2) pneumatisch mit einem weiteren Druckluftvorrat (450, 452) verbunden ist, und
- mit einem dritten Anschluss (50.3), der pneumatisch mit dem Ausfallbremsventil (40) verbunden ist, wobei
- das Auswahlventil (50) ausgebildet ist, denjenigen von dem ersten und zweiten Anschluss (50.1, 50.2) pneumatisch mit dem dritten Anschluss (50.3) zu verbinden, an dem der höhere Druck (p1, p2) anliegt.

3. Ausfallsicherheitsventileinheit (1) nach einem der vorherigen Ansprüche, **dadurch gekennzeichnet, dass**
- der Ausfallbremsdruck (pN) als Steuerdruck (pS) für einen Achsmodulator (432, 434, 438) bereitgestellt wird, oder
- der Ausfallbremsdruck (pN) als Bremsdruck (pA) für einen Bremszylinder (440) bereitgestellt wird.

4. Ausfallsicherheitsventileinheit (1) nach einem der vorherigen Ansprüche, **gekennzeichnet durch**
- ein weiteres Ausfallbremsventil (60), das mit dem Ausfallbremsventil (40) pneumatisch in Reihe geschaltet ist, und von einer Steuereinheit (410, 420), insbesondere einer weiteren Steuereinheit (420) oder einer externen Steuereinheit (418), steuerbar ist, und
- das weitere Ausfallbremsventil (60) im nicht angesteuerten, insbesondere stromlosen, Zustand in einer Öffnungsstellung (60A) geöffnet ist derart, dass der am Hauptanschluss (20) anliegende erste Druck (p1) als Ausfallbremsdruck (pN) am Ausfallbremsanschluss (22) bereitgestellt wird.

5. Ausfallsicherheitsventileinheit (1) nach Anspruch 4, **dadurch gekennzeichnet, dass**
- das weitere Ausfallbremsventil (60) als ein 2/2-Wegeventil (62), insbesondere als ein 2/2-Wege-Magnetventil (64), ausgebildet ist.

6. Ausfallsicherheitsventileinheit (1) nach einem der vorherigen Ansprüche, **dadurch gekennzeichnet, dass**
- das Ausfallbremsventil (40) und/oder das weitere Ausfallbremsventil (60) als ein 3/2-Wegeventil (42, 66), insbesondere als ein 3/2-Wege-Magnetventil (44, 68), ausgebildet ist.

7. Ausfallsicherheitsventileinheit (1) nach einem der vorherigen Ansprüche, **gekennzeichnet durch** ein Druckbegrenzungsventil (34).

8. Ausfallsicherheitsventileinheit (1) nach einem der vorherigen Ansprüche, **gekennzeichnet durch**
- ein Bistabilventil (72), ausgebildet zum Umschalten zwischen einer ersten, die Ventilhauptleitung (30) sperrenden oder mit einer Entlüftung (72.3) verbindenden Deaktivierungsstellung (72A) und einer zweiten, die Ventilhauptleitung (30) verbindenden Aktivierungsstellung (72B), wobei das Bistabilventil (72) mit dem mindestens einen Ausfallbremsventil (40, 60) pneumatisch in Reihe geschaltet ist.

9. Ausfallsicherheitsventileinheit (1) nach einem der vorherigen Ansprüche, **gekennzeichnet durch**
- ein weiteres Auswahlventil (56) mit einem ersten weiteren Anschluss (56.1), der zum Empfangen des Bremswertgeberdrucks (pGB) pneumatisch mit einem Bremswertgeber (436), insbesondere mit einer pneumatischen Vorderachsmodulator-Steuerleitung (492), verbunden ist,
- einem zweiten weiteren Anschluss (56.2), der zum Empfangen des Ausfallbremsdrucks (pN) pneumatisch mit dem Ausfallbremsanschluss (22) verbunden ist, und
- einem dritten weiteren Anschluss (56.3), der pneumatisch mit einem Betriebsbremszylinder (440) oder einem Achsmodulator (432) verbunden ist, wobei
- das weitere Auswahlventil (56) ausgebildet ist, denjenigen von dem ersten und zweiten weiteren Anschluss (56.1, 56.2) pneumatisch mit dem dritten weiteren Anschluss (56.3) zu verbinden, an dem der höhere Druck (pGB, pN) anliegt.

10. Elektronisch steuerbares pneumatisches Bremssystem (204) für ein Fahrzeug (200), insbesondere ein Nutzfahrzeug (202), aufweisend eine Steuereinheit (410),
**gekennzeichnet durch**
- eine Ausfallsicherheitsventileinheit (1) gemäß einem der vorherigen Ansprüche, wobei
- die Ausfallsicherheitsventileinheit (1) in einem separaten Ansteuerzweig (430) angeordnet ist und
- zur Bereitstellung eines Ausfallbremsdrucks (pN) für einen Achsmodulator (434) zum Auslösen einer Ausfallbremsung (BA) des Fahrzeugs (200) über einen Ausfallbremsanschluss (22) mit mindestens einem Betriebsbremszylinder (440) und/oder einer Betriebsbremskammer (444) und/oder einem Achsmodulator (434, 438) pneumatisch verbindbar ist.

11. Elektronisch steuerbares pneumatisches Bremssystem (204) nach Anspruch 10, **gekennzeichnet durch**
- einen Achsmodulator (434, 438) mit einer Drossel (610), insbesondere Abdüsungsbohrung (612), die einen, einen Steuerdruck (pS) führenden Teil (603) des Achsmodulators (434) mit einem, einen Arbeitsdruck (pA) führenden Teil (605) des Achsmodulators (434) pneumatisch verbindet.

12. Elektronisch steuerbares pneumatisches Bremssystem (204) nach Anspruch 10 oder 11, **dadurch gekennzeichnet, dass**
- die Steuereinheit (410) einem Primärsystem (B1) des elektronisch steuerbaren pneumatischen Bremssystems (204) zugeordnet ist, und das elektronisch steuerbare pneumatische Bremssystem (204) weiter aufweist:
- eine weitere Steuereinheit (420) für eine erste Rückfallebene (B2), wobei
- das Ausfallbremsventil (40) von der Steuereinheit (410) und das weitere Ausfallbremsventil (60) von der weiteren Steuereinheit (420) ansteuerbar ist, und
- die erste Steuereinheit (410) und die zweite Steuereinheit (420) unabhängig voneinander mit Energie versorgt und/oder sich wenigstens teilweise gegenseitig in ihrer Funktion ersetzen können.

13. Fahrzeug (200), insbesondere Nutzfahrzeug (202) mit einem Bremssystem (204) nach einem der Ansprüche 10 bis 12.

14. Verfahren zum Betreiben eines Bremssystems (204) mit einer Ausfallsicherheitsventileinheit (1), insbesondere nach einem der Ansprüche 1 bis 9, für eine Ausfallbremsfunktion (FN) eines elektronisch steuerbaren pneumatischen Bremssystems (204), insbesondere nach einem der Ansprüche 10 bis 12, für ein Fahrzeug (200), oder ein Nutzfahrzeug (202), insbesondere nach Anspruch 13,
**gekennzeichnet durch** die Schritte:
- Bereitstellen eines Signals (S1, S2) zum Aussperren eines für eine Ausfallbremsung (BA) wirksamen Ausfallbremsdrucks (pN) durch eine Steuereinheit (410, 420) oder eine externe Steuereinheit (418),
- Unterbrechen des Bereitstellens des Signals (S1, S2) in einem Fehlerfall (FF) und/oder einem Stromausfall (FS) und/oder einem Diagnosefall (FT) der Steuereinheit (410, 420), dadurch selbsttätiges Beenden des Aussperrens des Ausfallbremsdrucks (pN) zum Auslösen einer Ausfallbremsung (BA) des Fahrzeugs (200), wobei
- der Ausfallbremsdruck (pN) ein von einer Feststellbremsfunktion (FFS) ausgesteuerter Feststellbremsdruck (pFS) zum Belüften von Feststellbremszylindern (442) ist.

15. Verfahren nach Anspruch 14, **gekennzeichnet durch** einen Diagnoseablauf (AD) aufweisend den Schritt:
- Ermitteln des Ausfallbremsdrucks (pN), insbesondere mittels eines Drucksensors (84), am Ausfallbremsanschluss (22), wobei
- vor dem Unterbrechen des Bereitstellens des Signals (S1, S2) eine Druckaussteuerung im Betriebsbremssystem (510), insbesondere eine Bremsanforderung (AB) an einen Achsmodulator (432), angefordert wird.

16. Verfahren nach Anspruch 15, **dadurch gekennzeichnet, dass**
- die Ausfallsicherheitsventileinheit (1) pneumatisch von einem Bremskreis (514, 522) versorgt wird, der unabhängig von dem die Ausfallbremsung (BA) durchführenden Bremskreis (512) des Betriebsbremssystems (510) ist.

17. Verfahren nach Anspruch 15 oder 16, **dadurch gekennzeichnet, dass**
- die Ausfallsicherheitsventileinheit (1) pneumatisch von einem Druckvorrat (450, 452) versorgt wird, der unabhängig von einem Druckvorrat (454) des, die Ausfallbremsung (BA) durchführenden, Bremskreises (512) des Betriebsbremssystems (510) ist.

18. Verfahren nach einem der Ansprüche 15 bis 17, **dadurch gekennzeichnet, dass**
- der Diagnoseablauf (AD) während einer Betriebsbremsung (BB) des Betriebsbremssystems (510), insbesondere während einer vorhandenen Bremsanforderung (AB), durchgeführt wird, oder
- der Diagnoseablauf (AD) während eines Stillstands des Fahrzeugs (200) durchgeführt wird, wobei insbesondere eine Bremsanforderung (AB), insbesondere von einer externen Steuereinheit (418) und/oder einer Automatikbetrieb-Steuereinheit (464) generiert wird.

19. Verfahren nach einem der Ansprüche 15 bis 18, **dadurch gekennzeichnet, dass**
- die Bremsanforderung (AB) von einem Bremswertgeber (436) und/oder einer externen Steuereinheit (418) und/oder einer Automatikbetrieb-Steuereinheit (464) bereitgestellt wird, wobei insbesondere die Bremsanforderung (AB) über einen Fahrzeug-Datenbus (462) bereitgestellt wird und/oder die Bremsanforderung (AB) in Form eines CAN-Signals, insbesondere in Form eines XBR-Signals, ausgebildet ist.

20. Verfahren nach einem der Ansprüche 15 bis 19, **gekennzeichnet durch** die Schritte:
- Bereitstellen eines Signals (S1, S2, S3) für ein einzelnes Ventil (40, 60, 70, 72), insbesondere für ein einzelnes Ausfallbremsventil (40,60) oder ein einzelnes Bistabilventil (72),
- Ermitteln des Ausfallbremsdrucks (pN), insbesondere Plausibilisieren der Druckreaktion für das einzelne Ventil (40, 60, 70).

## Claims

1. Failure safety valve unit (1) for a failure brake function (FN) of an electronically controllable pneumatic brake system (204) for a vehicle (200), in particular a commercial vehicle (202), the brake system (204) comprising at least one control unit (410), and the failure safety valve unit (1) comprising:
- a main connection (20) which provides a first pressure (p1), and a failure brake connection (22),
- a failure brake valve (40) designed as a monostable valve, which is controllable by the control unit (410) or by an external control unit (418), and is designed
- to pneumatically connect the main connection (20) and the failure brake connection (22) in an open position (40A) in order to control a failure brake pressure (pN) at the failure brake connection (22),
**characterized in that**
- in the event of a fault (FF) and/or a power failure (FS) and/or a diagnostic case (FT) of the control unit (410), the failure brake valve (40) is in the open position (40A), and **in that**
- failure braking (BA) of the vehicle (200) is triggered via the provision of the failure brake pressure (pN) at the failure brake connection (22) by the brake system (204),
- the main connection (20) being pneumatically connected to a parking brake function (FFS) in order to receive a controlled parking brake pressure (pFS) as the first pressure (p1).

2. Failure safety valve unit (1) according to claim 1, **characterized in that**
- the failure safety valve unit (1) comprises a selection valve (50) having a first connection (50.1), which is pneumatically connected to the parking brake function (FFS) in order to receive the first pressure (p1),
- having a second connection (50.2), which is pneumatically connected to a further compressed air supply (450, 452) in order to receive a further supply pressure (pWV) as a second pressure (p2), and
- having a third connection (50.3), which is pneumatically connected to the failure brake valve (40),
- the selection valve (50) being designed to pneumatically connect whichever of the first and the second connection (50.1, 50.2) at which the higher pressure (p1, p2) is present to the third connection (50.3).

3. Failure safety valve unit (1) according to either of the preceding claims, **characterized in that**
- the failure brake pressure (pN) is provided as a control pressure (pS) for an axle modulator (432, 434, 438), or
- the failure brake pressure (pN) is provided as a brake pressure (pA) for a brake cylinder (440).

4. Failure safety valve unit (1) according to any of the preceding claims, **characterized by**
- a further failure brake valve (60) which is pneumatically connected in series to the failure brake valve (40) and is controllable by a control unit (410, 420), in particular by a further control unit (420) or an external control unit (418), and
- the further failure brake valve (60) being open in an open position (60A) in the non-actuated state, in particular in the currentless state, such that the first pressure (p1) present at the main connection (20) is provided as a failure brake pressure (pN) at the failure brake connection (22).

5. Failure safety valve unit (1) according to claim 4, **characterized in that**
- the further failure brake valve (60) is designed as a 2/2-way valve (62), in particular as a 2/2-way solenoid valve (64).

6. Failure safety valve unit (1) according to any of the preceding claims, **characterized in that**
- the failure brake valve (40) and/or the further failure brake valve (60) is designed as a 3/2-way valve (42, 66), in particular as a 3/2-way solenoid valve (44, 68).

7. Failure safety valve unit (1) according to any of the preceding claims, **characterized by** a pressure-limiting valve (34).

8. Failure safety valve unit (1) according to any of the preceding claims, **characterized by**
- a bistable valve (72) designed to switch between a first deactivation position (72A), which blocks the valve main line (30) or connects it to a vent (72.3), and a second activation position (72B), which connects the valve main line (30), the bistable valve (72) being pneumatically connected in series to the at least one failure brake valve (40, 60).

9. Failure safety valve unit (1) according to any of the preceding claims, **characterized by**
- a further selection valve (56) comprising a first further connection (56.1) which is pneumatically connected to a brake value transmitter (436), in particular to a pneumatic front axle modulator control line (492), in order to receive the brake value transmitter pressure (pGB),
- comprising a second further connection (56.2) which is pneumatically connected to the failure brake connection (22) in order to receive the failure brake pressure (pN), and
- comprising a third further connection (56.3) which is pneumatically connected to a service brake cylinder (440) or to an axle modulator (432),
- the further selection valve (56) being designed to pneumatically connect whichever of the first and the second further connection (56.1, 56.2) at which the higher pressure (pGB, pN) is present to the third further connection (56.3).

10. Electronically controllable pneumatic brake system (204) for a vehicle (200), in particular a commercial vehicle (202), which brake system comprises a control unit (410),
**characterized by**
- a failure safety valve unit (1) according to any of the preceding claims,
- the failure safety valve unit (1) being arranged in a separate actuation branch (430) and
- being pneumatically connectable via a failure brake connection (22) to at least one service brake cylinder (440) and/or a service brake chamber (444) and/or an axle modulator (434, 438) in order to provide a failure brake pressure (pN) for an axle modulator (434) to trigger failure braking (BA) of the vehicle (200).

11. Electronically controllable pneumatic brake system (204) according to claim 10, **characterized by**
- an axle modulator (434, 438) comprising a throttle (610), in particular a jet bore (612), which pneumatically connects a part (603) of the axle modulator (434) that carries a control pressure (pS) to a part (605) of the axle modulator (434) that carries a working pressure (pA).

12. Electronically controllable pneumatic brake system (204) according to claim 10 or claim 11, **characterized in that**
- the control unit (410) is assigned to a primary system (B1) of the electronically controllable pneumatic brake system (204), and the electronically controllable pneumatic brake system (204) further comprises:
- a further control unit (420) for a first fallback level (B2),
- the failure brake valve (40) being actuatable by the control unit (410) and the further failure brake valve (60) being actuatable by the further control unit (420), and
- the first control unit (410) and the second control unit (420) supplied with energy independently of one another and/or being able to at least partially replace one another in function.

13. Vehicle (200), in particular a commercial vehicle (202), comprising a brake system (204) according to any of claims 10 to 12.

14. Method for operating a brake system (204) comprising a failure safety valve unit (1), in particular according to any of claims 1 to 9, for a failure brake function (FN) of an electronically controllable pneumatic brake system (204), in particular according to any of claims 10 to 12, for a vehicle (200), or a commercial vehicle (202), in particular according to claim 13,
**characterized by** the steps of:
- providing, via a control unit (410, 420) or an external control unit (418), a signal (S1, S2) for locking out a failure brake pressure (pN) which is effective for failure braking (BA),
- interrupting the provision of the signal (S1, S2) in the event of a fault (FF) and/or a power failure (FS) and/or a diagnostic case (FT) of the control unit (410, 420), thereby automatically ending the locking out of the failure brake pressure (pN) in order to trigger failure braking (BA) of the vehicle (200),
- the failure brake pressure (pN) being a parking brake pressure (pFS) controlled by a parking brake function (FFS) for ventilating parking brake cylinders (442).

15. Method according to claim 14, **characterized by** a diagnostic sequence (AD) comprising the step of:
- determining the failure brake pressure (pN), in particular by means of a pressure sensor (84), at the failure brake connection (22),
- pressure control in the service brake system (510), in particular a braking request (AB) to an axle modulator (432), being requested prior to the interruption of the provision of the signal (S1, S2).

16. Method according to claim 15, **characterized in that**
- the failure safety valve unit (1) is supplied with energy pneumatically by a brake circuit (514, 522) which is independent of the brake circuit (512) of the service brake system (510) that carries out the failure braking (BA).

17. Method according to claim 15 or claim 16, **characterized in that**
- the failure safety valve unit (1) is supplied with energy pneumatically by a pressure supply (450, 452) which is independent of a pressure supply (454) of the brake circuit (512) of the service brake system (510) that carries out the failure braking (BA).

18. Method according to any of claims 15 to 17, **characterized in that**
- the diagnostic sequence (AD) is carried out during service braking (BB) of the service brake system (510), in particular during an existing braking request (AB), or
- the diagnostic sequence (AD) is carried out during a standstill of the vehicle (200), in particular a braking request (AB), in particular from an external control unit (418) and/or an automatic operating control unit (464), being generated.

19. Method according to any of claims 15 to 18, **characterized in that**
- the braking request (AB) is provided by a brake value transmitter (436) and/or an external control unit (418) and/or an automatic operating control unit (464), in particular the braking request (AB) being provided via a vehicle data bus (462) and/or the braking request (AB) being in the form of a CAN signal, in particular in the form of an XBR signal.

20. Method according to any of claims 15 to 19, **characterized by** the steps of:
- providing a signal (S1, S2, S3) for an individual valve (40, 60, 70, 72), in particular for an individual failure brake valve (40, 60) or an individual bistable valve (72),
- determining the failure brake pressure (pN), in particular plausibility checking the pressure reaction for the individual valve (40, 60, 70).

## Revendications

1. Unité à soupape de sécurité en cas de défaillance (1) pour une fonction de frein en cas de défaillance (FN) d'un système de frein (204) pneumatique à commande électronique pour un véhicule (200), en particulier un véhicule utilitaire (202), dans laquelle le système de frein (204) présente au moins une unité de commande (410), et l'unité à soupape de sécurité en cas de défaillance (1) présente :
- un raccord principal (20) fournissant une première pression (p1) et un raccord de frein en cas de défaillance (22),
- une soupape de frein en cas de défaillance (40) réalisée sous forme de soupape monostable, laquelle peut être commandée par l'unité de commande (410) ou par une unité de commande externe (418), et est conçue
- pour raccorder pneumatiquement le raccord principal (20) au raccord de frein en cas de défaillance (22) dans une position d'ouverture (40A) pour le réglage au maximum d'une pression de frein en cas de défaillance (pN) au niveau du raccord de frein en cas de défaillance (22),
**caractérisée en ce que**
- dans un cas de défaut (FF) et/ou dans un cas de panne de courant (FS) et/ou dans un cas de diagnostic (FT) de l'unité de commande (410), la soupape de frein en cas de défaillance (40) est dans la position d'ouverture (40A), **et en ce que**
- un freinage en cas de défaillance (BA) du véhicule (200) est déclenché par l'intermédiaire de la fourniture de la pression de frein en cas de défaillance (pN) au niveau du raccord de frein en cas de défaillance (22) par le système de frein (204), dans laquelle
- le raccord principal (20) est raccordé pneumatiquement à une fonction de frein de stationnement (FFS) pour la réception, en tant que première pression (p1), d'une pression de frein de stationnement (pFS) commandée.

2. Unité à soupape de sécurité en cas de défaillance (1) selon la revendication 1, **caractérisée en ce que**
- l'unité à soupape de sécurité en cas de défaillance (1) présente une soupape de sélection (50) comportant un premier raccord (50.1) raccordé pneumatiquement à la fonction de frein de stationnement (FFS) pour la réception de la première pression (p1),
- comportant un deuxième raccord (50.2) raccordé pneumatiquement à une réserve d'air sous pression supplémentaire (450, 452) pour la réception, en tant que seconde pression (p2), d'une pression de réserve supplémentaire (pWV), et
- comportant un troisième raccord (50.3) raccordé pneumatiquement à la soupape de frein en cas de défaillance (40), dans laquelle
- la soupape de sélection (50) est conçue pour raccorder pneumatiquement ledit premier et ledit deuxième raccord (50.1, 50.2) au troisième raccord (50.3) au niveau duquel la pression (p1, p2) la plus élevée est appliquée.

3. Unité à soupape de sécurité en cas de défaillance (1) selon l'une des revendications précédentes, **caractérisée en ce que**
- la pression de frein en cas de défaillance (pN) est fournie en tant que pression de commande (pS) pour un modulateur d'essieu (432, 434, 438), ou
- la pression de frein en cas de défaillance (pN) est fournie en tant que pression de frein (pA) pour un cylindre de frein (440).

4. Unité à soupape de sécurité en cas de défaillance (1) selon l'une des revendications précédentes, **caractérisée par**
- une soupape de frein en cas de défaillance supplémentaire (60) commutée pneumatiquement en série avec la soupape de frein en cas de défaillance (40) et pouvant être commandée par une unité de commande (410, 420), en particulier par une unité de commande supplémentaire (420) ou par une unité de commande externe (418), et
- la soupape de frein en cas de défaillance supplémentaire (60), à l'état non commandé, en particulier non alimenté, est ouverte dans une position d'ouverture (60A) de telle sorte que la première pression (p1) appliquée au niveau du raccord principal (20) est fournie sous forme de pression de frein en cas de défaillance (pN) au niveau du raccord de frein en cas de défaillance (22).

5. Unité à soupape de sécurité en cas de défaillance (1) selon la revendication 4, **caractérisée en ce que**
- la soupape de frein en cas de défaillance supplémentaire (60) est réalisée sous forme de soupape à 2/2 voies (62), en particulier sous forme de soupape électromagnétique à 2/2 voies (64).

6. Unité à soupape de sécurité en cas de défaillance (1) selon l'une des revendications précédentes, **caractérisée en ce que**
- la soupape de frein en cas de défaillance (40) et/ou la soupape de frein en cas de défaillance supplémentaire (60) sont réalisées sous forme de soupapes à 3/2 voies (42, 66), en particulier sous forme de soupapes électromagnétiques à 3/2 voies (44, 68).

7. Unité à soupape de sécurité en cas de défaillance (1) selon l'une des revendications précédentes, **caractérisée par** une soupape de limitation de pression (34).

8. Unité à soupape de sécurité en cas de défaillance (1) selon l'une des revendications précédentes, **caractérisée par**
- une soupape bistable (72), conçue pour la commutation entre une première position de désactivation (72A) bloquant la conduite principale de soupape (30) ou la raccordant à une évacuation d'air (72.3) et une seconde position d'activation (72B) raccordant la conduite principale de soupape (30), dans laquelle la soupape bistable (72) est commutée pneumatiquement en série avec l'au moins une soupape de frein en cas de défaillance (40, 60).

9. Unité à soupape de sécurité en cas de défaillance (1) selon l'une des revendications précédentes, **caractérisée par**
- une soupape de sélection supplémentaire (56) comportant un premier raccord supplémentaire (56.1) raccordé pneumatiquement à un transducteur de valeur de frein (436), en particulier à une conduite de commande pneumatique de modulateur d'essieu avant (492), pour la réception de la pression de transducteur de valeur de frein (pGB),
- un deuxième raccord supplémentaire (56.2) raccordé pneumatiquement au raccord de frein en cas de défaillance (22) pour la réception de la pression de frein en cas de défaillance (pN), et
- un troisième raccord supplémentaire (56.3) raccordé pneumatiquement à un cylindre de frein de service (440) ou à un modulateur d'essieu (432), dans laquelle
- la soupape de sélection supplémentaire (56) est conçue pour raccorder pneumatiquement ledit premier et ledit deuxième raccord supplémentaire (56.1, 56.2) au troisième raccord supplémentaire (56.3) au niveau duquel la pression (pGB, pN) la plus élevée est appliquée.

10. Système de frein (204) pneumatique à commande électronique pour un véhicule (200), en particulier un véhicule utilitaire (202), présentant une unité de commande (410),
**caractérisé par**
- une unité à soupape de sécurité en cas de défaillance (1) selon l'une des revendications précédentes, dans lequel
- l'unité à soupape de sécurité en cas de défaillance (1) est disposée dans une branche de commande (430) séparée et
- peut être raccordée pneumatiquement à au moins un cylindre de frein de service (440) et/ou à une chambre de frein de service (444) et/ou à un modulateur d'essieu (434) pour la fourniture d'une pression de frein en cas de défaillance (pN) pour un modulateur d'essieu (434, 438) pour le déclenchement d'un freinage en cas de défaillance (BA) du véhicule (200) par l'intermédiaire d'un raccord de frein en cas de défaillance (22).

11. Système de frein (204) pneumatique à commande électronique selon la revendication 10, **caractérisé en ce que**
- un modulateur d'essieu (434, 438) comportant un étrangleur (610), en particulier un alésage de dépressurisation (612), raccorde pneumatiquement une partie (603) du modulateur d'essieu (434) conduisant une pression de commande (pS) à une partie (605) du modulateur d'essieu (434) conduisant une pression de travail (pA).

12. Système de frein (204) pneumatique à commande électronique selon la revendication 10 ou 11, **caractérisé en ce que**
- l'unité de commande (410) est associée à un système primaire (B1) du système de frein (204) pneumatique à commande électronique, et le système de frein (204) pneumatique à commande électronique présente en outre :
- une unité de commande supplémentaire (420) pour un premier plan de recul (B2), dans lequel
- la soupape de frein en cas de défaillance (40) peut être commandée par l'unité de commande (410) et la soupape de frein en cas de défaillance supplémentaire (60) peut être commandée par l'unité de commande supplémentaire (420), et
- la première unité de commande (410) et la seconde unité de commande (420) sont alimentées en énergie indépendamment l'une de l'autre et/ou peuvent se substituer mutuellement au moins partiellement dans leur fonction.

13. Véhicule (200), en particulier véhicule utilitaire (202), comportant un système de frein (204) selon l'une des revendications 10 à 12.

14. Procédé permettant de faire fonctionner un système de frein (204) comportant une unité à soupape de sécurité en cas de défaillance (1), en particulier selon l'une des revendications 1 à 9, pour une fonction de frein en cas de défaillance (FN) d'un système de frein (204) pneumatique à commande électronique, en particulier selon l'une des revendications 10 à 12, pour un véhicule (200), ou un véhicule utilitaire (202), en particulier selon la revendication 13,
**caractérisé par** les étapes consistant à :
- fournir un signal (S1, S2) pour le blocage d'une pression de frein en cas de défaillance (pN) agissant pour un freinage en cas de défaillance (BA) par une unité de commande (410, 420) ou une unité de commande externe (418),
- interrompre la fourniture du signal (S1, S2) dans un cas de défaut (FF) et/ou dans un cas de panne de courant (FS) et/ou dans un cas de diagnostic (FT) de l'unité de commande (410, 420), en mettant ainsi fin automatiquement au blocage de la pression de frein en cas de défaillance (pN) pour le déclenchement d'un freinage en cas de défaillance (BA) du véhicule (200), dans lequel
- la pression de frein en cas de défaillance (pN) est une pression de frein de stationnement (pFS) commandée par une fonction de frein de stationnement (FFS) pour l'aération de cylindres de frein de stationnement (442).

15. Procédé selon la revendications 14, **caractérisé par** un déroulement de diagnostic (AD) présentant l'étape consistant à :
- déterminer la pression de frein en cas de défaillance (pN), en particulier au moyen d'un capteur de pression (84), au niveau du raccord de frein en cas de défaillance (22), dans lequel
- avant l'interruption de la fourniture du signal (S1, S2), une commande de pression dans le système de frein de service (510), en particulier une demande de frein (AB), est demandée à un modulateur d'essieu (432).

16. Procédé selon la revendication 15, **caractérisé en ce que**
- l'unité à soupape de sécurité en cas de défaillance (1) est alimentée pneumatiquement par un circuit de frein (514, 522) indépendant du circuit de frein (512) du système de frein de service (510) effectuant le freinage en cas de défaillance (BA).

17. Procédé selon la revendication 15 ou 16, **caractérisé en ce que**
- l'unité à soupape de sécurité en cas de défaillance (1) est alimentée pneumatiquement par une réserve de pression (450, 452) indépendante d'une réserve de pression (454) du circuit de frein (512) du système de frein de service (510) effectuant le freinage en cas de défaillance (BA).

18. Procédé selon l'une des revendications 15 à 17, **caractérisé en ce que**
- le déroulement de diagnostic (AD) est effectué pendant un freinage de service (BB) du système de frein de service (510), en particulier pendant une demande de frein (AB) existante, ou
- le déroulement de diagnostic (AD) est effectué pendant un temps d'arrêt du véhicule (200), dans lequel, en particulier, une demande de frein (AB) est générée, en particulier par une unité de commande externe (418) et/ou par une unité de commande à fonctionnement automatique (464).

19. Procédé selon l'une des revendications 15 à 18, **caractérisé en ce que**
- la demande de frein (AB) est fournie par un transducteur de valeur de frein (436) et/ou par une unité de commande externe (418) et/ou par une unité de commande à fonctionnement automatique (464), dans lequel, en particulier, la demande de frein (AB) est fournie par l'intermédiaire d'un bus de données de véhicule (462) et/ou la demande de frein (AB) est réalisée sous forme de signal CAN, en particulier sous forme de signal XBR.

20. Procédé selon l'une des revendications 15 à 19, **caractérisé par** les étapes consistant à :
- fournir un signal (S1, S2, S3) pour une seule soupape (40, 60, 70, 72), en particulier pour une seule soupape de frein en cas de défaillance (40, 60) ou une seule soupape bistable (72),
- déterminer la pression de frein en cas de défaillance (pN), en particulier vérifier la plausibilité de la réponse à la pression pour la seule soupape (40, 60, 70).
